# EUROPEAN PATENT APPLICATION

(11) **EP 1 698 518 A2**
(43) Date of publication of application: **06.09.2006**
(21) Application number: 06251172.0
(22) Date of filing: 03.03.2006
(51) Int. Cl.: B60R 11/02

(54) **Multimedia device integration system for vehicles**

(30) Priority: 03.03.2005 US 71667
(71) Applicant: Marlow, Ira M., Fort Lee, NJ 07024 (US)
(72) Inventor: Marlow, Ira M., Fort Lee, NJ 07024 (US)
(74) Representative: Smyth, Gyles Darren

(57) **Abstract**

An multimedia device integration system is provided. One or more after-market audio or video devices, such as a CD player, CD changer, digital media device (*e.g.*, MP3 player, MP4 player, WMV player, Apple iPod, portable music center, or other device) satellite receiver (*e.g.*, XM or Sirius receiver), DAB receiver, video device (*e.g.,* DVD player), cellular telephone, or any other device or combinations thereof, is integrated for use with an existing OEM or after-market car stereo or video system, wherein control commands can be issued at the car stereo or video system and data from the after-market device can be displayed on the car stereo or video system. Control commands generated at the car stereo or video system are received, processed, converted into a format recognizable by the after-market device, and dispatched to the after-market device for execution. Information from the after-market device is converted into a format recognizable by the car stereo or video system, and dispatched to the car stereo or video system for display thereon. One or more auxiliary input sources can be integrated with the car stereo or video system, and selected using the controls of the car stereo or video system. A docking station is provided for docking a portable audio or video device for integration with the car stereo or video system.

## Description

### FIELD OF THE INVENTION

The present invention relates to a multimedia device integration system. More specifically, the present invention relates to a multimedia device integration system for integrating after-market components such as satellite receivers, CD players, CD changers, digital media devices (e.g., MP3 players, MP4 players, WMV players, Apple iPod devices, portable media centers, and other devices), Digital Audio Broadcast (DAB) receivers, auxiliary audio sources, video devices (e.g., DVD players), cellular telephones, and other devices for use with factory-installed (OEM) or after-market car stereo and video systems.

### RELATED ART

Automobile audio systems have continued to advance in complexity and the number of options available to automobile purchasers. Early audio systems offered a simple AM and/or FM tuner, and perhaps an analog tape deck for allowing cassettes, 8-tracks, and other types of tapes to be played while driving. Such early systems were closed, in that external devices could not be easily integrated therewith.

With advances in digital technology, CD players have been included with automobile audio systems. Original Equipment Manufacturers (OEMs) often produce car stereos having CD players and/or changers for allowing CDs to be played while driving. However, such systems often include proprietary buses and protocols that do not allow after-market audio systems, such as satellite receivers (e.g., XM satellite tuners), digital audio broadcast (DAB) receivers, digital media players (e.g., Apple iPod, MP3, MP4, WMV, etc.), CD changers, auxiliary input sources, video devices (e.g., DVD players), cellular telephones, and the like, to be easily integrated therewith. Thus, automobile purchasers are frequently forced to either entirely replace the OEM audio system, or use same throughout the life of the vehicle or the duration of ownership. Even if the OEM radio is replaced with an after-market radio, the after-market radio also frequently is not operable with an external device.

A particular problem with integrating after-market audio and video systems with existing car stereo and video systems is that signals generated by both systems are in proprietary formats, and are not capable of being processed by the after-market system. Additionally, signals generated by the after-market system are also in a proprietary format that is not recognizable by the car stereo or video system. Thus, in order to integrate after-market systems with existing car stereo and video systems, it is necessary to convert signals between such systems.

It known in the art to provide one or more expansion modules for OEM and after-market car stereos for allowing external audio products to be integrated with the car stereo. However, such expansion modules only operate with and allow integration of external audio products manufactured by the same manufacturer as the OEM / after-market car stereo. For example, a satellite receiver manufactured by PIONEER, Inc., cannot be integrated with an OEM car radio manufactured by TOYOTA or an after-market car radio manufactured by CLARION, Inc. Thus, existing expansion modules only serve the limited purpose of integrating equipment by the same manufacturer as the car stereo. Thus, it would be desirable to provide an integration system that allows any audio device of any manufacture to be integrated with any OEM or after-market radio system. Further, radio-frequency (RF) transmitters and cassette tape adapters have been developed for allowing music from a device external to a car radio, such as a portable CD player, to be played through the car radio using the FM receiver or the cassette deck of the radio. However, such systems are often prone to interference, and do not provide high fidelity.

Moreover, it would be desirable to provide an integration system that not only achieves integration of various audio and video devices that are alien to a given OEM or after-market car stereo or video system, but also allows for information to be exchanged between the after-market device and the car stereo or video system. For example, it would be desirable to provide a system wherein station, track, time, and song information can be retrieved from the after-market device, formatted, and transmitted to the car stereo or video system for display thereby, such as at an LCD panel of the car stereo or on one or more display panels of a car video system. Such information could be transmitted and displayed on both hardwired car stereo and video systems (e.g., radios installed in dashboards or at other locations within the car), or integrated for display on one or more software or graphically-driven radio systems operable with graphical display panels. Additionally, it would be desirable to provide a multimedia device integration system that allows a user to control more than one device, such as a CD or satellite receiver and one or more auxiliary sources, and to quickly and conveniently switch between same using the existing controls of the car stereo or video system.

Accordingly, the present invention addresses these needs by providing a multimedia device integration system that allows a plurality of after-market devices, such as CD players, CD changers, digital media devices (e.g., MP3 players, MP4 players, Apple iPod, WMV players, portable media centers, and other devices), satellite receivers, DAB receivers, auxiliary input sources, video devices (e.g., DVD players), cellular telephones, or any combination thereof, to be integrated into existing car stereo and video systems while allowing information to be displayed on, and control to be provided from, the car stereo or video system.

### SUMMARY OF THE INVENTION

The present invention relates to a multimedia device integration system. One or more after-market audio devices, such as CD players, CD changers, digital media devices (e.g., MP3 players, MP4 players, WMV players, Apple iPod devices, portable media centers, and other devices), satellite receivers (e.g., XM or Sirius receivers), digital audio broadcast (DAB) receiver, or auxiliary input sources, can be connected to and operate with an existing stereo system in an automobile, such as an OEM car stereo system or an after-market car stereo system installed in the automobile. The integration system connects to and interacts with the car stereo at any available port of the car stereo, such as a CD input port, a satellite input, or other known type of connection. If the car stereo system is an after-market car stereo system, the present invention generates a signal that is sent to the car stereo to keep same in an operational state and responsive to external data and signals. Commands generated at the control panel are received by the present invention and converted into a format recognizable by the after-market device. The formatted commands are executed by the after-market device, and audio therefrom is channeled to the car stereo. Information from the after-market device is received by the present invention, converted into a format recognizable by the car stereo, and forwarded to the car stereo for display thereby. The formatted information could include information relating to a CD or MP3 track being played, channel, song, and artist information from a satellite receiver or DAB receiver, or video information from one or more external devices connected to the present invention. The information can be presented as one or more menus, textual, or graphical prompts for display on an LCD display of the radio, allowing interaction with the user at the radio. A docking port may be provided for allowing portable external audio devices to be connected to the interface of the present invention.

In an embodiment of the present invention, a dual-input device is provided for integrating both an external audio device and an auxiliary input with an OEM or after-market car stereo. The user can select between the external audio device and the auxiliary input using the controls of the car stereo. The invention can automatically detect the type of device connected to the auxiliary input, and integrate same with the car stereo.

In another embodiment of the present invention, an interface is provided for integrating a plurality of auxiliary input sources with an existing car stereo system. A user can select between the auxiliary sources using the control panel of the car stereo. One or more after-market audio devices can be integrated with the auxiliary input sources, and a user can switch between the audio device and the auxiliary input sources using the car stereo. Devices connected to the auxiliary input sources are inter-operable with the car stereo, and are capable of exchanging commands and data via the interface.

In another embodiment of the present invention, an interface is provided for integrating an external device for use with a car stereo or video system, wherein the interface is positioned within the car stereo or video system. The system comprises a car stereo or video system; an after-market device external to the car stereo or video system; an interface positioned within the car stereo or video system and connected between the car stereo or video system and the after-market device for exchanging data and audio or video signals between the car stereo or video system and the after-market device; means for processing and dispatching commands for controlling the after-market device from the car stereo or video system in a format compatible with the after-market device; and means for processing and displaying data from the after-market device on a display of the car stereo or video system in a format compatible with the car stereo or video system. The after-market device could comprise one or more of a CD changer, CD player, satellite receiver (e.g., XM or Sirius), digital media device *(e.g.,* MP3, MP4, WMV, or Apple iPod device), video device (e.g., DVD player), cellular telephone, or any combination thereof.

In another embodiment of the present invention, an interface is provided for integrating a cellular telephone for use with a car stereo or video system. The system comprises a car stereo or video system; a cellular telephone external to the car stereo or video system; an interface connected between the car stereo or video system and the cellular telephone for exchanging data and audio or video signals between the car stereo or video system and the cellular telephone; means for processing and dispatching commands for controlling the cellular telephone from the car stereo or video system in a format compatible with the cellular telephone; and means for processing and displaying data from the cellular telephone on a display of the car stereo or video system in a format compatible with the car stereo or video system.

In another embodiment of the present invention, an interface is provided for integrating an external video system for use with a car video system. The system comprises a car video system; an after-market video device external to the car video system; an interface connected between the car video system and the after-market video device for exchanging data, audio, and video signals between the car video system and the after-market video device; means for processing and dispatching commands for controlling the after-market video device from the car video system in a format compatible with the after-market video device; and means for processing and displaying data from the after-market video device on a display of the car video system in a format compatible with the car video system.

The present invention also provides an interface for integrating a plurality of after-market devices for use with a car stereo or video system using a single interface. In one embodiment, the system comprises an interface in electrical communication with a car stereo or video system and an after-market device; a plurality of configuration jumpers in the interface for specifying a first device type corresponding to the car stereo or video system and a second device type corresponding to the after-market device; and a plurality of protocol conversion software blocks stored in memory in the interface for converting signals from the after-market device into a first format compatible with the car stereo or video system and for converting signals from the car stereo or video system into a second format compatible with the after-market device, wherein at least one of the protocol conversion software blocks are selected by the interface using settings of the plurality of configuration jumpers. In another embodiment, the system comprises an interface in electrical communication with a car stereo or video system and an after-market device; first and second wiring harnesses attached to the interface, wherein the first wiring harness includes a first electrical configuration corresponding to the car stereo or video system and the second wiring harness includes a second electrical configuration corresponding to the after-market device; and a plurality of protocol conversion software blocks stored in memory in the interface for converting signals from the after-market device into a first format compatible with the car stereo or video system and for converting signals from the car stereo or video system into a second format compatible with the after-market device, wherein at least one of the protocol conversion software blocks are selected by the interface using the first and second electrical configurations of the first and second wiring harnesses. A plurality of wiring harnesses can be provided for integrating a plurality of devices.

The present invention also provides a method for integrating an after-market device for use with a car stereo or video system, comprising the steps of interconnecting the car stereo or video system and the after-market device with an interface; determining a first device type corresponding to the car stereo or video system and a second device type corresponding to the after-market device; loading a protocol conversion software block from memory in the interface using the first and second device types; converting signals from the after-market device into a first format compatible with the car stereo or video system using the protocol conversion software block; and converting signals from the car stereo or video system into a second format compatible with the after-market device using the protocol conversion software block.

### BRIEF DESCRIPTION OF THE DRAWINGS

These and other important objects and features of the invention will be apparent from the following Detailed Description of the Invention, taken in connection with the accompanying drawings, in which:
**FIG. 1** is a block diagram showing the multimedia device integration system of the present invention.
**FIG. 2a** is a block diagram showing an alternate embodiment of the multimedia device integration system of the present invention, wherein a CD player is integrated with a car radio.
**FIG. 2b** is a block diagram showing an alternate embodiment of the multimedia device integration system of the present invention, wherein a MP3 player is integrated with a car radio.
**FIG. 2c** is a block diagram showing an alternate embodiment of the multimedia device integration system of the present invention, wherein a satellite or DAB receiver is integrated with a car radio.
**FIG. 2d** is a block diagram showing an alternate embodiment of the multimedia device integration system of the present invention, wherein a plurality of auxiliary input sources are integrated with a car radio.
**FIG. 2e** is a block diagram showing an alternate embodiment of the multimedia device integration system of the present invention, wherein a CD player and a plurality of auxiliary input sources are integrated with a car radio.
**FIG. 2f** is a block diagram showing an alternate embodiment of the present invention, wherein a satellite or DAB receiver and a plurality of auxiliary input source are integrated with a car radio.
**FIG. 2g** is a block diagram showing an alternate embodiment of the present invention, wherein a MP3 player and a plurality of auxiliary input sources are integrated with a car radio.
**FIG. 2h** is a block diagram showing an alternate embodiment of the present invention, wherein a plurality of auxiliary interfaces and an audio device are integrated with a car stereo.
**FIG. 3a** is a circuit diagram showing a device according to the present invention for integrating a CD player or an auxiliary input source with a car radio.
**FIG. 3b** is a circuit diagram showing a device according to the present invention for integrating both a CD player and an auxiliary input source with a car radio, wherein the CD player and the auxiliary input are switchable by a user.
**FIG. 3c** is a circuit diagram showing a device according to the present invention for integrating a plurality of auxiliary input sources with a car radio.
**FIG. 3d** is a circuit diagram showing a device according to the present invention for integrating a satellite or DAB receiver with a car radio.
**FIG. 4a** is a flowchart showing processing logic according to the present invention for integrating a CD player with a car radio.
**FIG. 4b** is a flowchart showing processing logic according to the present invention for integrating a MP3 player with a car radio.
**FIG. 4c** is a flowchart showing processing logic according to the present invention for integrating a satellite receiver with a car radio.
**FIG. 4d** is a flowchart showing processing logic according to the present invention for integrating a plurality of auxiliary input sources with a car radio.
**FIG. 4e** is a flowchart showing processing logic according to the present invention for integrating a CD player and one or more auxiliary input sources with a car radio.
**FIG. 4f** is a flowchart showing processing logic according to the present invention for integrating a satellite or DAB receiver and one or more auxiliary input sources with a car radio.
**FIG. 4g** is a flowchart showing processing logic according to the present invention for integrating a MP3 player and one or more auxiliary input sources with a car stereo.
**FIG. 5** is a flowchart showing processing logic according to the present invention for allowing a user to switch between an after-market audio device and one or more auxiliary input sources.
**FIG. 6** is a flowchart showing processing logic according to the present invention for determining and handling various device types connected to the auxiliary input ports of the invention.
**FIG. 7a** is a perspective view of a docking station according to the present invention for retaining an audio device within a car.
**FIG. 7b** is an end view of the docking station of **FIG. 7a.**
**FIGS. 8a-8b** are perspective views of another embodiment of the docking station of the present invention, which includes the multimedia device integration system of the present invention incorporated therewith.
**FIG. 9** is a block diagram showing the components of the docking station of **FIGS. 8a-8b.**
**FIG. 10** is a block diagram showing an alternate embodiment of the multimedia device integration system of the present invention, wherein the interface is incorporated within a car stereo or car video system.
**FIG. 11a** is a diagram showing an alternate embodiment of the multimedia device integration system of the present invention for integrating a cellular telephone for use with a car stereo or video system; **FIG. 11b** is a flowchart showing processing logic for integrating a cellular telephone for use with a car stereo or video system.
**FIG. 12a** is a diagram showing an alternate embodiment of the multimedia device integration system of the present invention for integrating an after-market video device for use with a car video system; **FIG. 12b** is a flowchart showing processing logic for integrating an after-market video device for use with a car video system.
**FIG. 13a** is a block diagram showing an alternate embodiment of the multimedia device integration system of the present invention, wherein configuration jumpers and protocol conversion software blocks are provided for integrating after-market devices of various types using a single interface.
**FIG. 13b** is a block diagram showing an alternate embodiment of the multimedia device integration system of the present invention, wherein wiring harnesses and protocol conversion software blocks are provided for integrating after-market devices of various types using a single interface.
**FIG. 14** is a flowchart showing processing logic of the multimedia device integration system of the present invention for integrating after-market devices of various types using a single interface.
**FIG. 15** is a flowchart showing processing logic of the multimedia device integration system of the present invention for allowing a user to specify one or more after-market device types for integration using a single interface.
**FIG. 16** is a flowchart showing processing logic of the multimedia device integration system of the present invention for allowing a user to quickly navigate through a list of songs on one or more after-market devices using the controls of a car stereo or video system.
**FIG. 17** is a diagram showing an another embodiment of the present invention, wherein a plurality of external devices are integrated using a single interface.

### DETAILED DESCRIPTION OF THE INVENTION

The present invention relates to a multimedia device integration system. One or more after-market devices, such as a CD player, CD changer, digital media player (e.g., MP3 player, MP4 player, WMV player, Apple iPod, portable media center, or other device), satellite receiver, digital audio broadcast (DAB) receiver, video device (e.g., DVD player), cellular telephone, or the like, can be integrated with an existing car radio or car video device, such as an OEM or after-market car stereo or video system. Control of the after-market device is enabled using the car stereo or car video system, and information from the after-market device, such as channel, artist, track, time, song, and other information information, is retrieved form the after-market device, processed, and forwarded to the car stereo or car video system for display thereon. The information channeled to the car stereo or video system can include video from the external device, as well as graphical and menu-based information. A user can review and interact with information via the car stereo. Commands from the car stereo or video system are received, processed by the present invention into a format recognizable by the after-market device device, and transmitted thereto for execution. One or more auxiliary input channels can be integrated by the present invention with the car stereo or video system. The user can switch between one or more after-market devices and one or more auxiliary input channels using the control panel buttons of the car stereo or video system.

As used herein, the term "integration" or "integrated" is intended to mean connecting one or more external devices or inputs to an existing car stereo or video system via an interface, processing and handling signals, audio, and/or video information, allowing a user to control the devices via the car stereo or video system, and displaying data from the devices on the car stereo or video system. Thus, for example, integration of a CD player with a car stereo system allows for the CD player to be remotely controlled via the control panel of the stereo system, and data from the CD player to be sent to the display of the stereo. Of course, control of after-market devices can be provided at locations other than the control panel of the car stereo or video system without departing from the spirit or scope of the present invention. Further, as used herein, the term "inter-operable" is intended to mean allowing the external audio or video device to receive and process commands that have been formatted by the interface of the present invention, as well as allowing a car stereo or video system to display information that is generated by the external audio or video device and processed by the present invention. Additionally, by the term "inter-operable," it is meant allowing a device that is alien to the environment of an existing OEM or after-market car stereo or video system to be utilized thereby.

Also, as used herein, the terms "car stereo" and "car radio" are used interchangeably and are intended to include all presently existing car stereos, radios, video systems, such as physical devices that are present at any location within a vehicle, in addition to software and/or graphically- or display-driven receivers. An example of such a receiver is a software-driven receiver that operates on a universal LCD panel within a vehicle and is operable by a user via a graphical user interface displayed on the universal LCD panel. Further, any future receiver, whether a hardwired or a software/graphical receiver operable on one or more displays, is considered within the definition of the terms "car stereo" and "car radio," as used herein, and is within the spirit and scope of the present invention. Moreover, the term "car" is not limited to any specific type of automobile, but rather, includes all automobiles. Additionally, by the term "after-market," it is meant any device not installed by a manufacturer at the time of sale of the car.

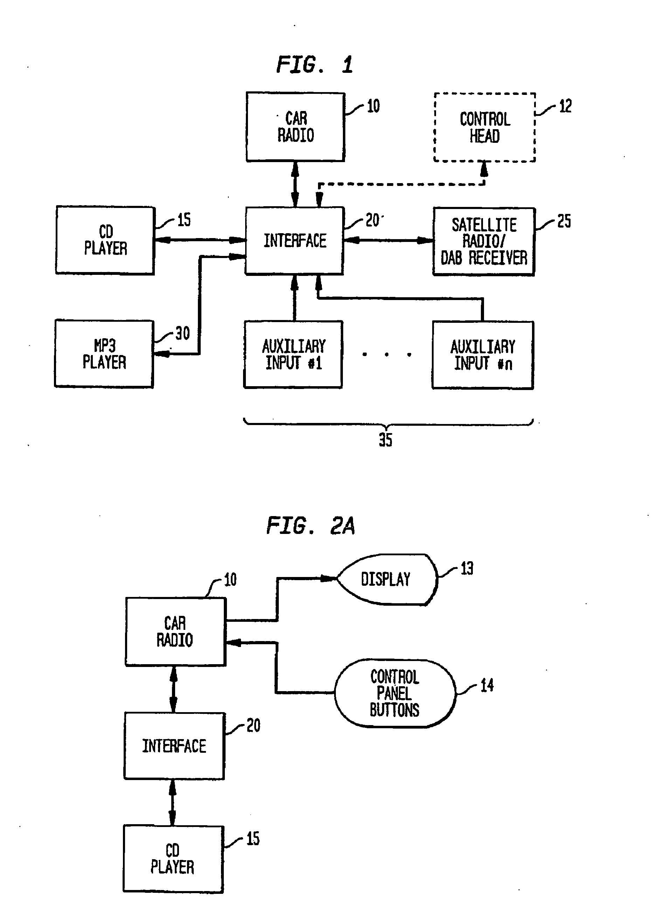

**FIG. 1** is a block diagram showing the multimedia device integration (or interface) system of the present invention, generally indicated at **20.** A plurality of devices and auxiliary inputs can be connected to the interface **20,** and integrated with an OEM or after-market car radio **10.** A CD player or changer **15** can be integrated with the radio **10** via interface **20.** A satellite radio or DAB receiver **25,** such as an XM or Sirius radio satellite receiver or DAB receiver known in the art, could be integrated with the radio **10,** via the interface **20.** Further, an MP3 player **30** could also be integrated with the radio **10** via interface **20.** The MP3 player **30** could be any known digital media device, such as an Apple iPod or any other digital media device. Moreover, a plurality of auxiliary input sources, illustratively indicated as auxiliary input sources **35** (comprising input sources 1 through *n, n* being any number), could also be integrated with the car radio **10** via interface **20.** Optionally, a control head **12,** such as that commonly used with after-market CD changers and other similar devices, could be integrated with the car radio **10** via interface **20,** for controlling any of the car radio **10,** CD player/changer **15,** satellite/DAB receiver **25,** MP3 player **30,** and auxiliary input sources **35.** Thus, as can be readily appreciated, the interface **20** of the present invention allows for the integration of a multitude of devices and inputs with an OEM or after-market car radio or stereo.

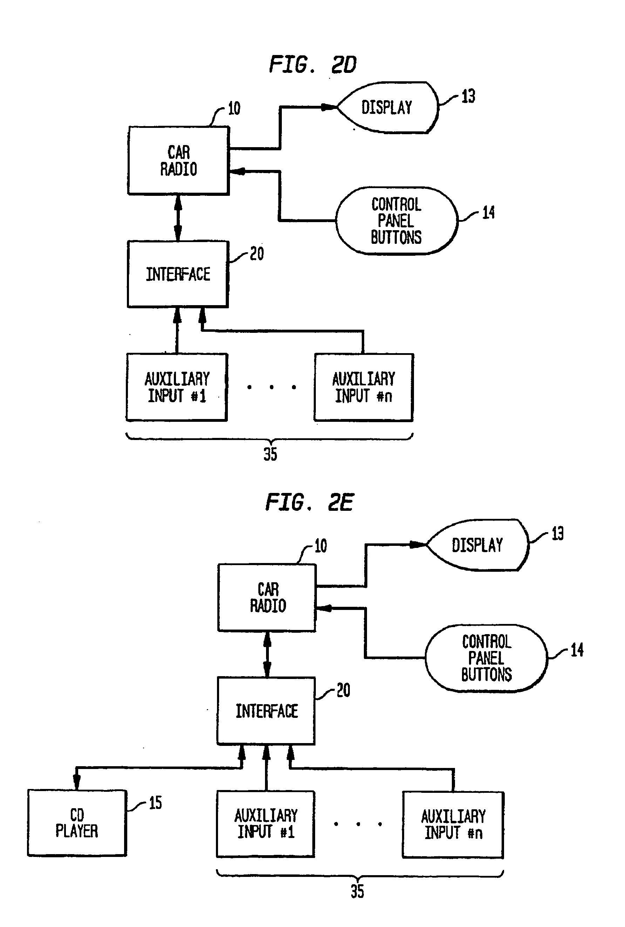

**FIG. 2a** is a block diagram of an alternate embodiment of the multimedia device interface system of the present invention, wherein a CD player/changer **15** is integrated with an OEM or after-market car radio **10.** The CD player **15** is electrically connected with the interface **20,** and exchanges data and audio signals therewith. The interface **20** is electrically connected with the car radio **10,** and exchanges data and audio signals therewith. In a preferred embodiment of the present invention, the car radio **10** includes a display **13** (such as an alphanumeric, electroluminescent display) for displaying information, and a plurality of control panel buttons **14** that normally operate to control the radio **10.** The interface **20** allows the CD player **15** to be controlled by the control buttons **14** of the radio **10.** Further, the interface **20** allows information from the CD player **15,** such as track, disc, time, and song information, to be retrieved therefrom, processed and formatted by the interface **20,** sent to the display **13** of the radio **10.**

Importantly, the interface **20** allows for the remote control of the CD player **15** from the radio **10** (e.g., the CD player **15** could be located in the trunk of a car, while the radio **10** is mounted on the dashboard of the car). Thus, for example, one or more discs stored within the CD player **15** can be remotely selected by a user from the radio **10,** and tracks on one or more of the discs can be selected therefrom. Moreover, standard CD operational commands, such as pause, play, stop, fast forward, rewind, track forward, and track reverse (among other commands) can be remotely entered at the control panel buttons **14** of the radio **10** for remotely controlling the CD player **15.**

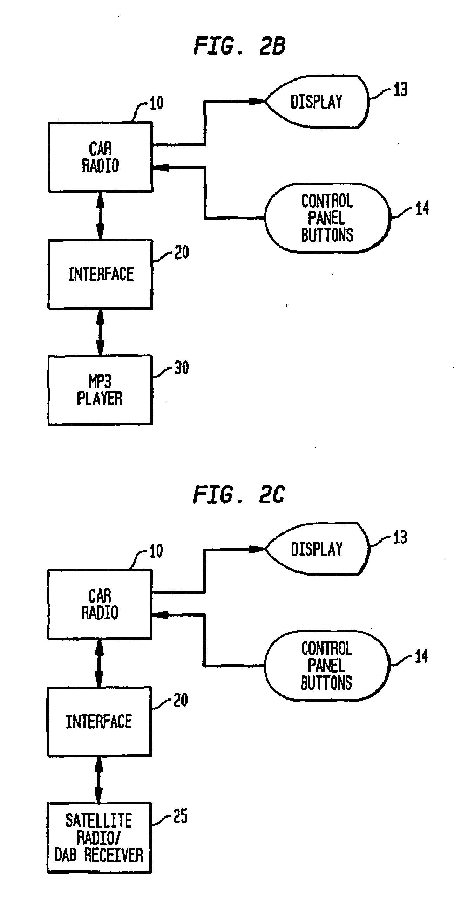

**FIG. 2b** is a block diagram showing an alternate embodiment of the present invention, wherein an MP3 player **30** is integrated with an OEM or after-market car radio **10** via interface **20.** As mentioned earlier, the interface **20** of the present invention allows for a plurality of disparate audio devices to be integrated with an existing car radio for use therewith. Thus, as shown in **FIG. 2b,** remote control of the MP3 player **30** via radio **10** is provided for via interface **20.** The MP3 player **30** is electronically interconnected with the interface **20,** which itself is electrically interconnected with the car radio **10.** The interface **20** allows data and audio signals to be exchanged between the MP3 player **30** and the car radio **10,** and processes and formats signals accordingly so that instructions and data from the radio **10** are processable by the MP3 player **30,** and vice versa. Operational commands, such as track selection, pause, play, stop, fast forward, rewind, and other commands, are entered via the control panel buttons **14** of car radio **10,** processed by the interface **20,** and formatted for execution by the MP3 player **30.** Data from the MP3 player, such as track, time, and song information, is received by the interface **20,** processed thereby, and sent to the radio **10** for display on display **13.** Audio from the MP3 player **30** is selectively forwarded by the interface **20** to the radio **10** for playing.

**FIG. 2c** is a block diagram showing an alternate embodiment of the present invention, wherein a satellite receiver or DAB receiver **25** is integrated with an OEM or after-market car radio **10** via the interface **20.** Satellite/DAB receiver **25** can be any satellite radio receiver known in the art, such as XM or Sirius, or any DAB receiver known in the art. The satellite/DAB receiver **25** is electrically interconnected with the interface **20,** which itself is electrically interconnected with the car radio **10.** The satellite/DAB receiver **25** is remotely operable by the control panel buttons **14** of the radio **10.** Commands from the radio **10** are received by the interface **20,** processed and formatted thereby, and dispatched to the satellite/DAB receiver **25** for execution thereby. Information from the satellite/DAB receiver **25,** including time, station, and song information, is received by the interface **20,** processed, and transmitted to the radio **10** for display on display **13.** Further, audio from the satellite/DAB receiver 25 is selectively forwarded by the interface **20** for playing by the radio **10.**

**FIG. 2d** is a block diagram showing an alternate embodiment of the present invention, wherein one or more auxiliary input sources **35** are integrated with an OEM or after-market car radio **10.** The auxiliary inputs **35** can be connected to analog sources, or can be digitally coupled with one or more audio devices, such as after-market CD players, CD changers, MP3 players, satellite receivers, DAB receivers, and the like, and integrated with an existing car stereo. Preferably, four auxiliary input sources are connectable with the interface **20,** but any number of auxiliary input sources could be included. Audio from the auxiliary input sources **35** is selectively forwarded to the radio **10** under command of the user. As will be discussed herein in greater detail, a user can select a desired input source from the auxiliary input sources **35** by depressing one or more of the control panel buttons **14** of the radio **10.** The interface **20** receives the command initiated from the control panel, processes same, and connects the corresponding input source from the auxiliary input sources **35** to allow audio therefrom to be forwarded to the radio **10** for playing. Further, the interface **20** determines the type of audio devices connected to the auxiliary input ports **35,** and integrates same with the car stereo **10.**

As mentioned previously, the present invention allows one or more external audio devices to be integrated with an existing OEM or after-market car stereo, along with one or more auxiliary input sources, and the user can select between these sources using the controls of the car stereo. Such "dual input" capability allows operation with devices connected to either of the inputs of the device, or both. Importantly, the device can operate in "plug and play" mode, wherein any device connected to one of the inputs is automatically detected by the present invention, its device type determined, and the device automatically integrated with an existing OEM or after-market car stereo. Thus, the present invention is not dependent any specific device type to be connected therewith to operate. For example, a user can first purchase a CD changer, plug same into a dual interface, and use same with the car stereo. At a point later in time, the user could purchase an XM tuner, plug same into the device, and the tuner will automatically be detected and integrated with the car stereo, allowing the user to select from and operate both devices from the car stereo. It should be noted that such plug and play capability is not limited to a dual input device, but is provided for in every embodiment of the present invention. The dual-input configuration of the preset invention is illustrated in **FIGS. 2e-2h** and described below.

**FIG. 2e** is a block diagram showing an alternate embodiment of the present invention, wherein an external CD player/changer **15** and one or more auxiliary input sources **35** are integrated with an OEM or after-market car stereo **10.** Both the CD player **15** and one or more of the auxiliary input sources **35** are electrically interconnected with the interface **20,** which, in turn, is electrically interconnected to the radio **10.** Using the controls **14** of the radio **10,** a user can select between the CD player **15** and one or more of the inputs **35** to selectively channel audio from these sources to the radio. The command to select from one of these sources is received by the interface **20,** processed thereby, and the corresponding source is channeled to the radio **10** by the interface **20.** As will be discussed later in greater detail, the interface **20** contains internal processing logic for selecting between these sources.

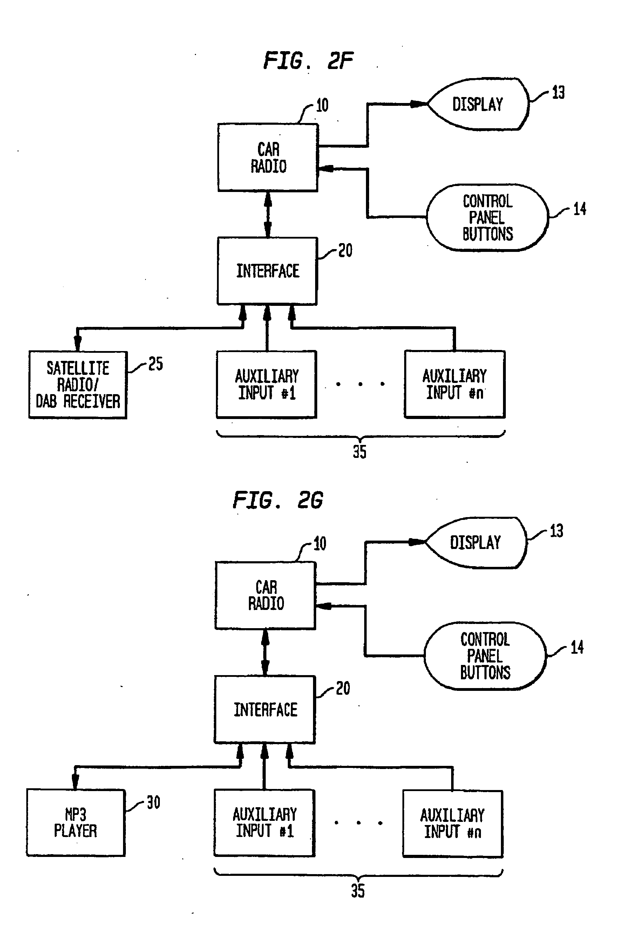

**FIG. 2f** is a block diagram of an alternate embodiment of the present invention, wherein a satellite receiver or DAB receiver and one or more auxiliary input sources are integrated by the interface **20** with an OEM or after-market car radio **10.** Similar to the embodiment of the present invention illustrated in **FIG. 2e** and described earlier, the interface **20** allows a user to select between the satellite/DAB receiver **25** and one or more of the auxiliary input sources **35** using the controls **14** of the radio **10.** The interface **20** contains processing logic, described in greater detail below, for allowing switching between the satellite/DAB receiver **25** and one or more of the auxiliary input sources **35.**

**FIG. 2g** is a block diagram of an alternate embodiment of the present invention, wherein a MP3 player **30** and one or more auxiliary input sources **35** are integrated by the interface **20** with an OEM or after-market car radio **10.** Similar to the embodiments of the present invention illustrated in **FIGS. 2e** and **2f** and described earlier, the interface **20** allows a user to select between the MP3 player **30** and one or more of the auxiliary input sources **35** using the controls **14** of the radio **10.** The interface **20** contains processing logic, as will be discussed later in greater detail, for allowing switching between the MP3 player **30** and one or more of the auxiliary input sources **35.**

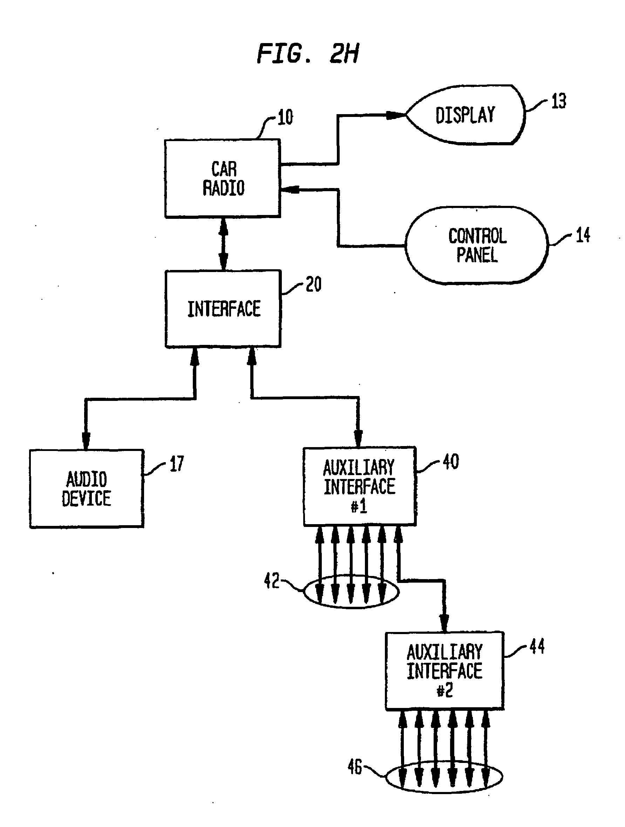

**FIG. 2h** is a block diagram showing an alternate embodiment of the present invention, wherein a plurality of auxiliary interfaces **40** and **44** and an audio device **17** are integrated with an OEM or after-market car stereo **10.** Importantly, the present invention can be expanded to allow a plurality of auxiliary inputs to be connected to the car stereo **10** in a tree-like fashion. Thus, as can be seen in **FIG. 2h,** a first auxiliary interface **40** is connected to the interface **20,** and allows data and audio from the ports **42** to be exchanged with the car radio **10.** Connected to one of the ports **42** is another auxiliary interface **44,** which, in turn, provides a plurality of input ports **46.** Any device connected to any of the ports **42** or **46** can be integrated with the car radio **10.** Further, any device connected to the ports **42** or **46** can be inter-operable with the car radio **10,** allowing commands to be entered from the car radio **10** (e.g., such as via the control panel **14)** for commanding the device, and information from the device to be displayed by the car radio **10.** Conceivably, by configuring the interfaces **40, 44,** and successive interfaces in a tree configuration, any number of devices can be integrated using the present invention.

The various embodiments of the present invention described above and shown in **FIGS. 1** through **2h** are illustrative in nature and are not intended to limit the spirit or scope of the present invention. Indeed, any conceivable audio device or input source, in any desired combination, can be integrated by the present invention into existing car stereo systems. Further, it is conceivable that not only can data and audio signals be exchanged between the car stereo and any external device, but also video information that can be captured by the present invention, processed thereby, and transmitted to the car stereo for display thereby and interaction with a user thereat.

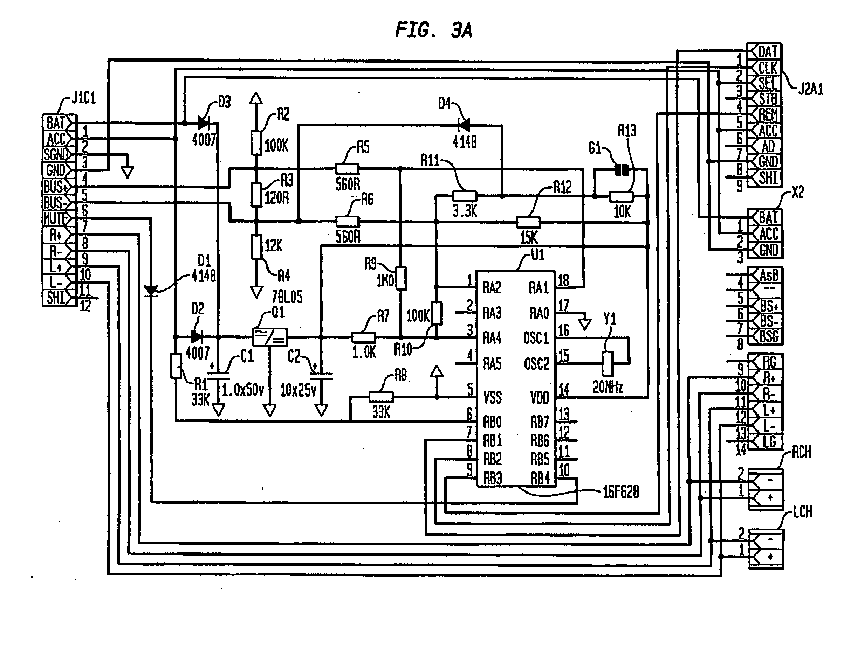

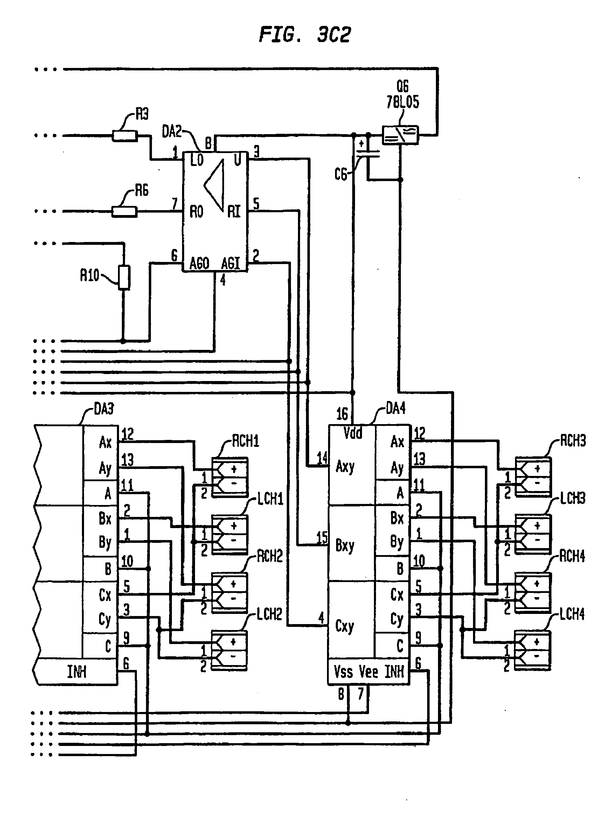

Various circuit configurations can be employed to carry out the present invention. Examples of such configurations are described below and shown in **FIGS. 3a-3d.**

**FIG. 3a** is an illustrative circuit diagram according to the present invention for integrating a CD player or an auxiliary input source with an existing car stereo system. A plurality of ports **J1C1, J2A1, X2, RCH,** and **LCH** are provided for allowing connection of the interface system of the present invention between an existing car radio, an after-market CD player or changer, or an auxiliary input source. Each of these ports could be embodied by any suitable electrical connector known in the art. Port **J1C1** connects to the input port of an OEM car radio, such as that manufactured by TOYOTA, Inc. Conceivably, port **J1C1** could be modified to allow connection to the input port of an after-market car radio. Ports **J2A1, X2, RCH**, and **LCH** connect to an after-market CD changer, such as that manufactured by PANASONIC, Inc., or to an auxiliary input source.

Microcontroller **U1** is in electrical communication with each of the ports **J1C1, J2A1,** and **X2,** and provides functionality for integrating the CD player or auxiliary input source connected to the ports **J2A1, X2, RCH,** and **LCH.** For example, microcontroller **U1** receives control commands, such as button or key sequences, initiated by a user at control panel of the car radio and received at the connector **J1C1,** processes and formats same, and dispatches the formatted commands to the **CD** player or auxiliary input source via connector **J2A1.** Additionally, the microcontroller **U1** receives information provided by the CD player or auxiliary input source via connector **J2A1,** processes and formats same, and transmits the formatted data to the car stereo via connector **J1C1** for display on the display of the car stereo. Audio signals provided at the ports **J2A1, X2, RCH** and **LCH** is selectively channeled to the car radio at port **J1C1** under control of one or more user commands and processing logic, as will be discussed in greater detail, embedded within microcontroller **U1.**

In a preferred embodiment of the present invention, the microcontroller **U1** comprises the 16F628 microcontroller manufactured by MICROCHIP, Inc. The 16F628 chip is a CMOS, flash-based, 8-bit microcontroller having an internal, 4 MHz internal oscillator, 128 bytes of EEPROM data memory, a capture/compare/PWM, a USART, 2 comparators, and a programmable voltage reference. Of course, any suitable microcontroller known in the art can be substituted for microcontroller **U1** without departing from the spirit or scope of the present invention.

A plurality of discrete components, such as resistors **R1** through **R13,** diodes **D1** through **D4,** capacitors **C1** and **C2,** and oscillator **Y1,** among other components, are provided for interfacing the microcontroller **U1** with the hardware connected to the connectors **J1C1, J2A1, X2, RCH**, and **LCH.** These components, as will be readily appreciated to one of ordinary skill in the art, can be arranged as desired to accommodate a variety of microcontrollers, and the numbers and types of discrete components can be varied to accommodate other similar controllers. Thus, the circuit shown in **FIG. 3a** and described herein is illustrative in nature, and modifications thereof are considered to be within the spirit and scope of the present invention.

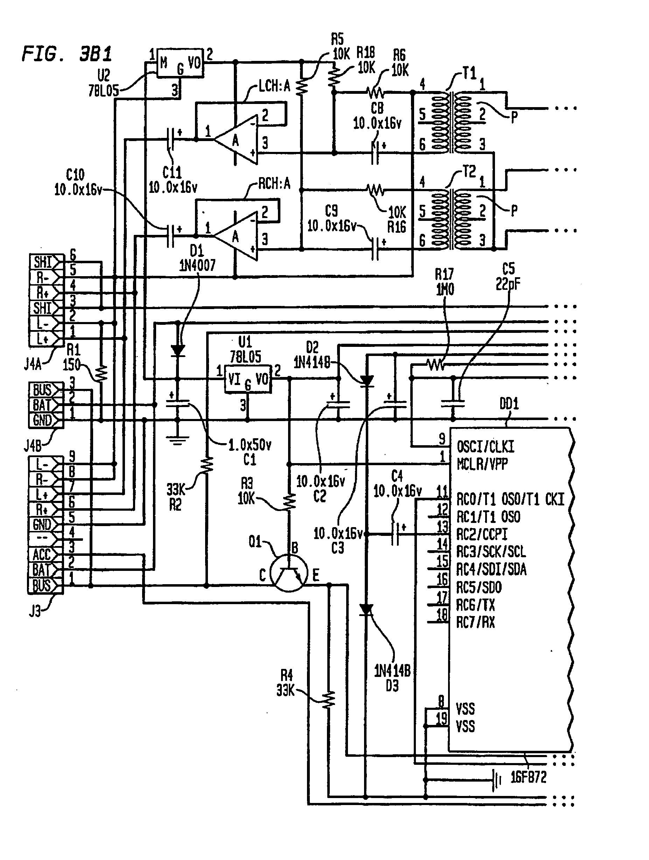

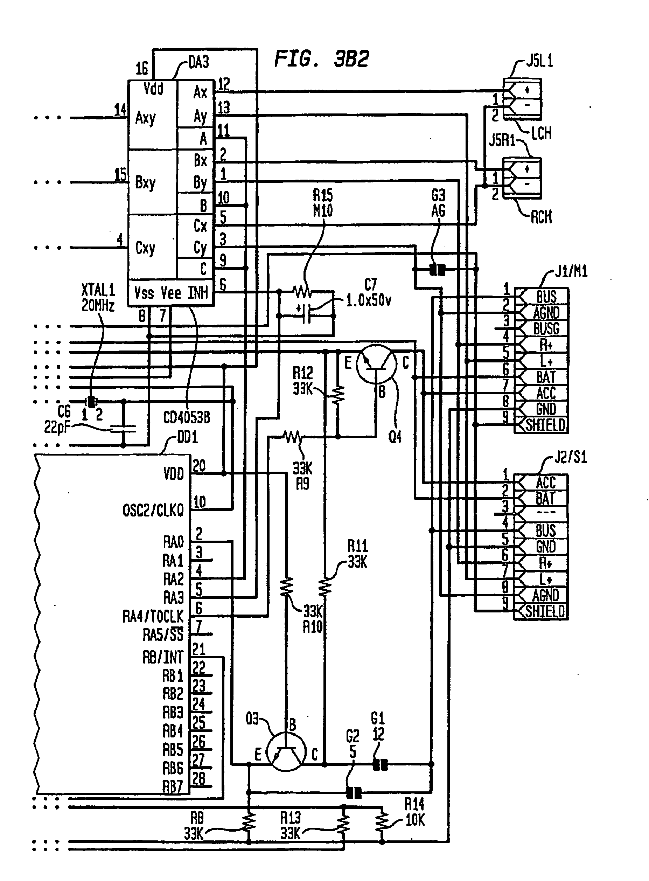

**FIG. 3b** is a diagram showing an illustrative circuit configuration according to the present invention, wherein one or more after-market CD changers / players and an auxiliary input source are integrated with an existing car stereo, and wherein the user can select between the CD changer/player and the auxiliary input using the controls of the car stereo. A plurality of connectors are provided, illustratively indicated as ports **J4A, J4B, J3, J5L1, J5R1, J1,** and **J2.** Ports **J4A, J4B,** and J3 allow the audio device interface system of the present invention to be connected to one or more existing car stereos, such as an OEM car stereo or an after-market car stereo. Each of these ports could be embodied by any suitable electrical connector known in the art. For example, ports **J4A** and **J4B** can be connected to an OEM car stereo manufactured by **BMW,** Inc. Port **J3** can be connected to a car stereo manufactured by LANDROVER, Inc. Of course, any number of car stereos, by any manufacturer, could be provided. Ports **J1** and **J2** allow connection to an after-market CD changer or player, such as that manufactured by ALPINE, Inc., and an auxiliary input source. Optionally, ports **J5L1** and **J5R1** allow integration of a standard analog (line-level) source. Of course, a single standalone CD player or auxiliary input source could be connected to either of ports **J1** or **J2.**

Microcontroller **DD1** is in electrical communication with each of the ports **J4A, J4B, J3, J5L1, J5R1, J1,** and **J2,** and provides functionality for integrating the CD player and auxiliary input source connected to the ports **J1** and **J2** with the car stereo connected to the ports **J4A** and **J4B** or **J3.** For example, microcontroller **DD1** receives control commands, such as button or key sequences, initiated by a user at control panel of the car radio and received at the connectors **J4A** and **J4B** or **J3,** processes and formats same, and dispatches the formatted commands to the CD player and auxiliary input source via connectors **J1** or **J2.** Additionally, the microcontroller **DD1** receives information provided by the CD player and auxiliary input source via connectors **J1** or **J2,** processes and formats same, and transmits the formatted data to the car stereo via connectors **J4A** and **J4B** or **J3** for display on the display of the car stereo. Further, the microcontroller **DD1** controls multiplexer **DA3** to allow selection between the CD player/changer and the auxiliary input. Audio signals provided at the ports **J1, J2**, **J5L1** and **J5R1** is selectively channeled to the car radio at ports **J4A** and **J4B** or **J3** under control of one or more user commands and processing logic, as will be discussed in greater detail, embedded within microcontroller **DD1.**

In a preferred embodiment of the present invention, the microcontroller **DD1** comprises the 16F872 microcontroller manufactured by MICROCHIP, Inc. The 16F872 chip is a CMOS, flash-based, 8-bit microcontroller having 64 bytes of EEPROM data memory, self-programming capability, an ICD, 5 channels of 10 bit Analog-to-Digital (A/D) converters, 2 timers, capture/compare/PWM functions, a USART, and a synchronous serial port configurable as either a 3-wire serial peripheral interface or a 2-wire inter-integrated circuit bus. Of course, any suitable microcontroller known in the art can be substituted for microcontroller **DD1** without departing from the spirit or scope of the present invention. Additionally, in a preferred embodiment of the present invention, the multiplexer **DA3** comprises the CD4053 triple, two-channel analog multiplexer/demultiplexer manufactured by FAIRCHILD SEMICONDUCTOR, Inc. Any other suitable multiplexer can be substituted for **DA3** without departing from the spirit or scope of the present invention.

A plurality of discrete components, such as resistors **R1** through **R18,** diodes **D1** through **D3,** capacitors **C1-C11,** and **G1-G3,** transistors **Q1-Q3,** transformers **T1** and **T2,** amplifiers LCH:A and LCH:B, oscillator XTAL1, among other components, are provided for interfacing the microcontroller **DD1** and the multiplexer **DA3** with the hardware connected to the connectors **J4A, J4B, J3, J5L1, J5R1, J1,** and **J2.** These components, as will be readily appreciated to one of ordinary skill in the art, can be arranged as desired to accommodate a variety of microcontrollers and multiplexers, and the numbers and types of discrete components can be varied to accommodate other similar controllers and multiplexers. Thus, the circuit shown in **FIG. 3b** and described herein is illustrative in nature, and modifications thereof are considered to be within the spirit and scope of the present invention.

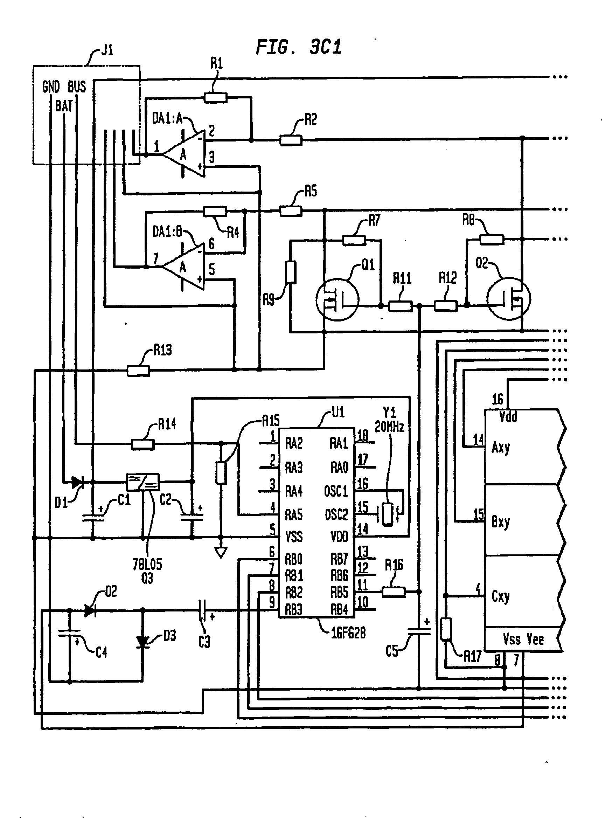

**FIG. 3c** is a diagram showing an illustrative circuit configuration for integrating a plurality of auxiliary inputs using the controls of the car stereo. A plurality of connectors are provided, illustratively indicated as ports **J1, RCH1, LCH1, RCH2, LCH2, RCH3, LCH3, RCH4,** and **LCH4.** Port **J1** allows the multimedia device integration system of the present invention to be connected to one or more existing car stereos. Each of these ports could be embodied by any suitable electrical connector known in the art. For example, port **J1** could be connected to an OEM car stereo manufactured by HONDA, Inc., or any other manufacturer. Ports **RCH1, LCH1, RCH2, LCH2, RCH3, LCH3, RCH4,** and **LCH4** allow connection with the left and right channels of four auxiliary input sources. Of course, any number of auxiliary input sources and ports/connectors could be provided.

Microcontroller **U1** is in electrical communication with each of the ports **J1, RCH1, LCH1, RCH2, LCH2, RCH3, LCH3, RCH4,** and **LCH4,** and provides functionality for integrating one or more auxiliary input sources connected to the ports **RCH1, LCH1, RCH2, LCH2, RCH3, LCH3, RCH4,** and **LCH4** with the car stereo connected to the port **J1.** Further, the microcontroller **U1** controls multiplexers **DA3** and **DA4** to allow selection amongst any of the auxiliary inputs using the controls of the car stereo. Audio signals provided at the ports **RCH1, LCH1, RCH2, LCH2, RCH3, LCH3, RCH4,** and **LCH4** are selectively channeled to the car radio at port **J1** under control of one or more user commands and processing logic, as will be discussed in greater detail, embedded within microcontroller **U1.** In a preferred embodiment of the present invention, the microcontroller **U1** comprises the 16F872 microcontroller discussed earlier. Additionally, in a preferred embodiment of the present invention, the multiplexers **DA3** and **DA4** comprises the CD4053 triple, two-channel analog multiplexer/demultiplexer, discussed earlier. Any other suitable microcontroller and multiplexers can be substituted for **U1, DA3,** and DA4 without departing from the spirit or scope of the present invention.

A plurality of discrete components, such as resistors **R1** through **R15,** diodes **D1** through **D3,** capacitors **C1-C5,** transistors **Q1-Q2,** amplifiers **DA1:A** and **DA1:B,** and oscillator **Y1,** among other components, are provided for interfacing the microcontroller **U1** and the multiplexers **DA3** and **DA4** with the hardware connected to the ports **J1, RCH1, LCH1, RCH2, LCH2, RCH3, LCH3, RCH4,** and **LCH4.** These components, as will be readily appreciated to one of ordinary skill in the art, can be arranged as desired to accommodate a variety of microcontrollers and multiplexers, and the numbers and types of discrete components can be varied to accommodate other similar controllers and multiplexers. Thus, the circuit shown in **FIG. 3c** and described herein is illustrative in nature, and modifications thereof are considered to be within the spirit and scope of the present invention.

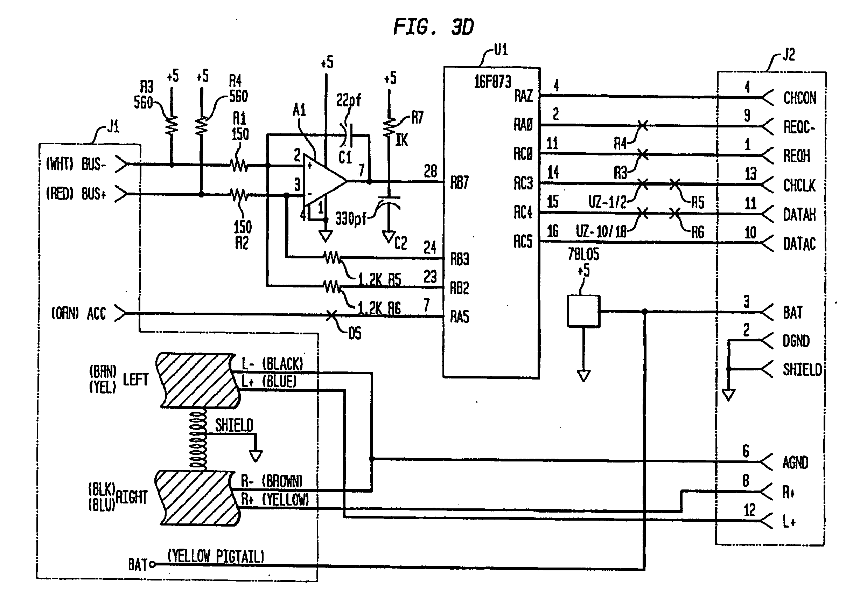

**FIG. 3d** is an illustrative circuit diagram according to the present invention for integrating a satellite receiver with an existing OEM or after-market car stereo system. Ports **J1** and **J2** are provided for allowing connection of the integration system of the present invention between an existing car radio and a satellite receiver. These ports could be embodied by any suitable electrical connector known in the art. Port **J2** connects to the input port of an existing car radio, such as that manufactured by KENWOOD, Inc. Port **1** connects to an after-market satellite receiver, such as that manufactured by PIONEER, Inc.

Microcontroller **U1** is in electrical communication with each of the ports **J1** and **J2,** and provides functionality for integrating the satellite receiver connected to the port **J1** with the car stereo connected to the port **J2.** For example, microcontroller **U1** receives control commands, such as button or key sequences, initiated by a user at control panel of the car radio and received at the connector **J2**, processes and formats same, and dispatches the formatted commands to the satellite receiver via connector **J2.** Additionally, the microcontroller **U1** receives information provided by the satellite receiver via connector **J1,** processes and formats same, and transmits the formatted data to the car stereo via connector J2 for display on the display of the car stereo. Audio signals provided at the port **J1** is selectively channeled to the car radio at port **J2** under control of one or more user commands and processing logic, as will be discussed in greater detail, embedded within microcontroller **U1.**

In a preferred embodiment of the present invention, the microcontroller **U1** comprises the 16F873 microcontroller manufactured by MICROCHIP, Inc. The 16F873 chip is a CMOS, flash-based, 8-bit microcontroller having 128 bytes of EEPROM data memory, self-programming capability, an ICD, 5 channels of 10 bit Analog-to-Digital (A/D) converters, 2 timers, 2 capture/compare/PWM functions, a synchronous serial port that can be configured as a either a 3-wire serial peripheral interface or a 2-wire inter-integrated circuit bus, and a USART. Of course, any suitable microcontroller known in the art can be substituted for microcontroller **U1** without departing from the spirit or scope of the present invention.

A plurality of discrete components, such as resistors **R1** through **R7,** capacitors **C1** and **C2,** and amplifier **A1**, among other components, are provided for interfacing the microcontroller **U1** with the hardware connected to the connectors **J1** and **J2.** These components, as will be readily appreciated to one of ordinary skill in the art, can be arranged as desired to accommodate a variety of microcontrollers, and the numbers and types of discrete components can be varied to accommodate other similar controllers. Thus, the circuit shown in FIG. 3d and described herein is illustrative in nature, and modifications thereof are considered to be within the spirit and scope of the present invention.

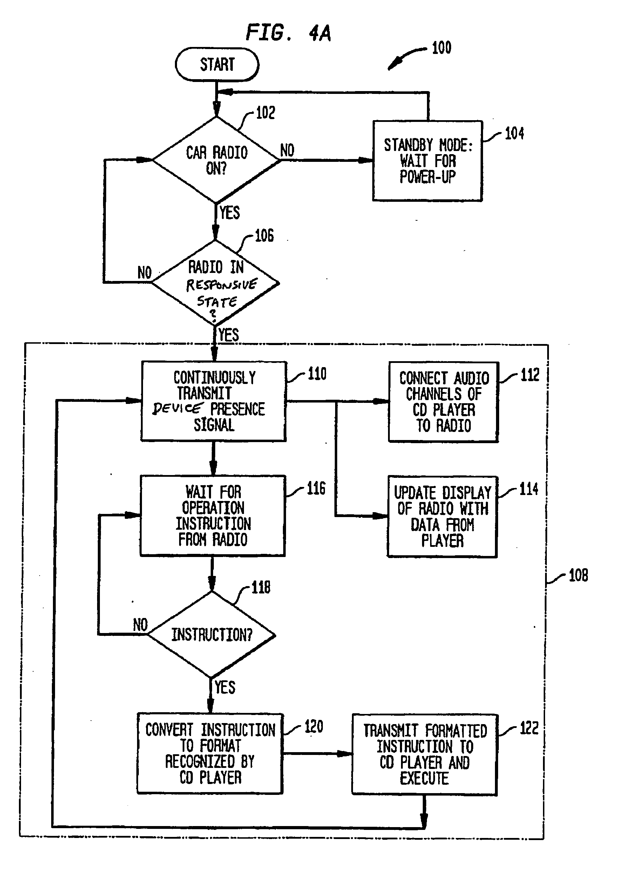

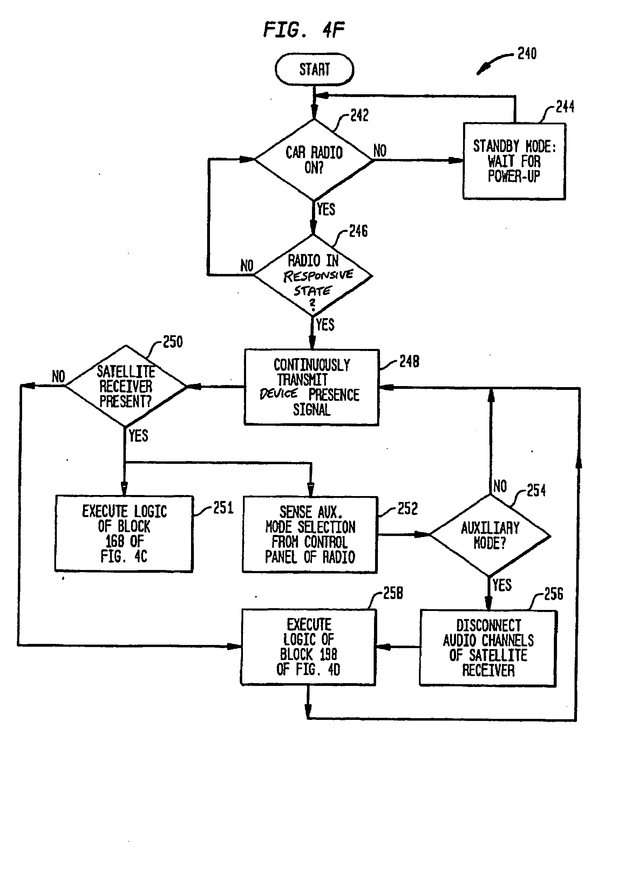

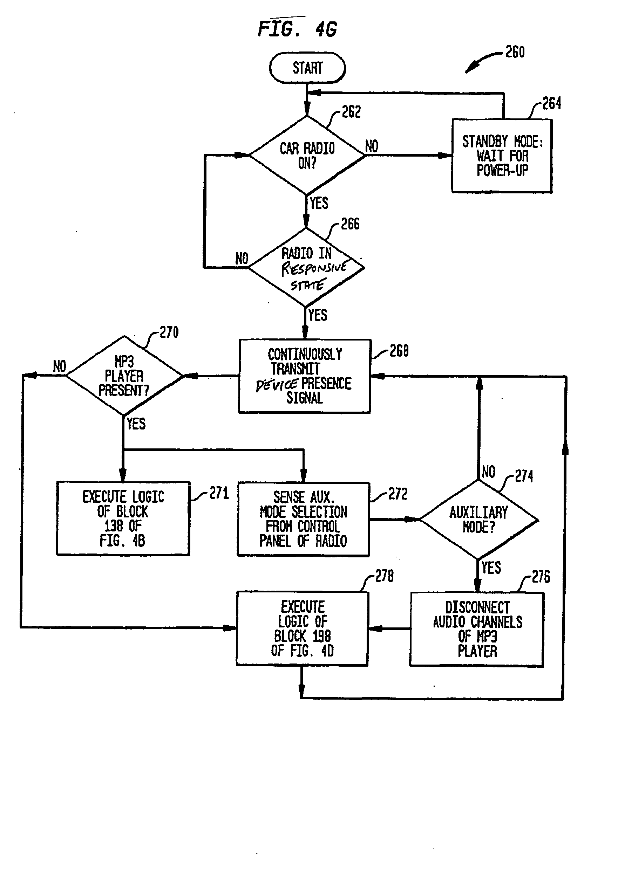

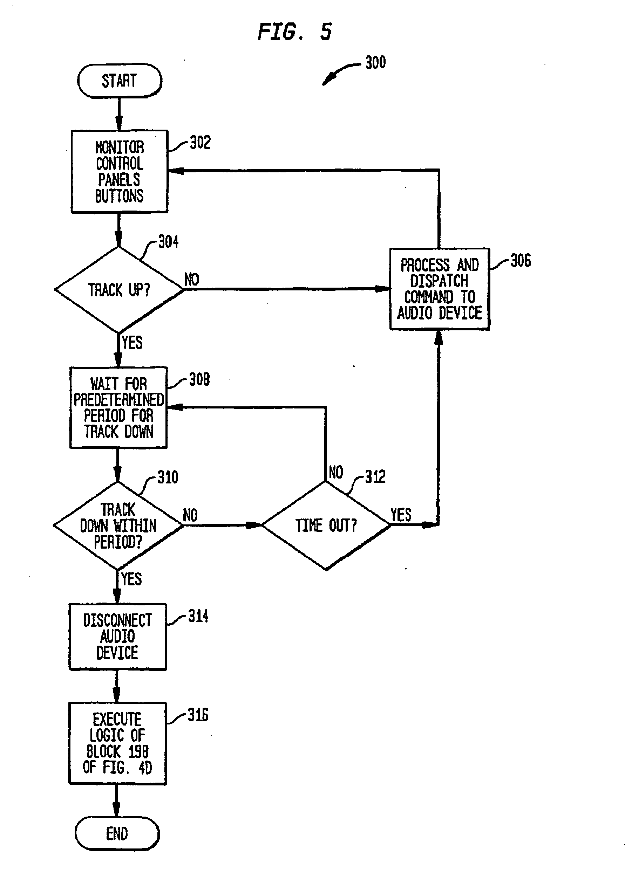

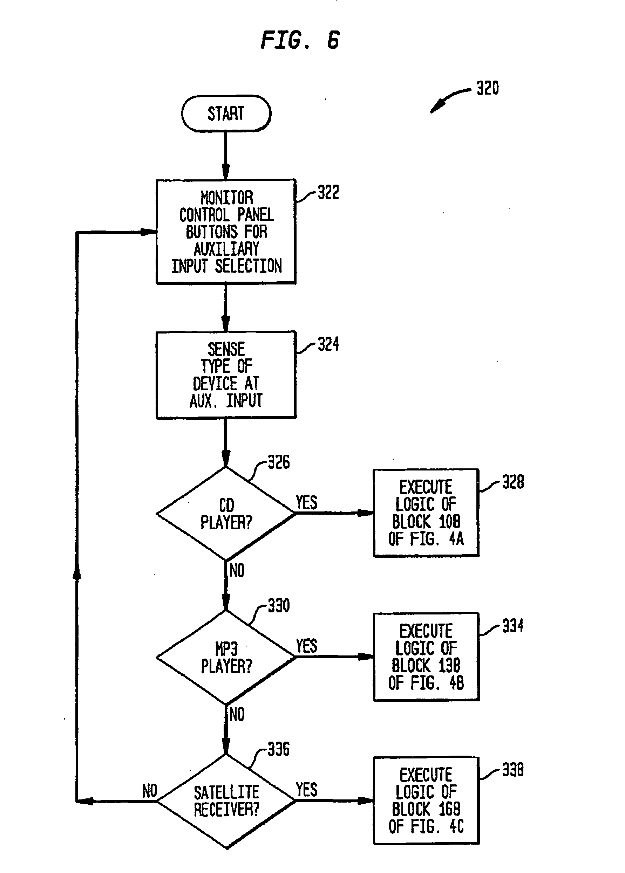

FIGS. 4a through 6 are flowcharts showing processing logic according to the present invention. Such logic can be embodied as software and/or instructions stored in a read-only memory circuit (e.g., and EEPROM circuit), or other similar device. In a preferred embodiment of the present invention, the processing logic described herein is stored in one or more microcontrollers, such as the microcontrollers discussed earlier with reference to **FIGS. 3a-3d.** Of course, any other suitable means for storing the processing logic of the present invention can be employed.

**FIG. 4a** is a flowchart showing processing logic, indicated generally at **100,** for integrating a CD player or changer with an existing OEM or after-market car stereo system. Beginning in step **100,** a determination is made as to whether the existing car stereo is powered on. If a negative determination is made, step **104** is invoked, wherein the present invention enters a standby mode and waits for the car stereo to be powered on. If a positive determination is made, step **106** is invoked, wherein a second determination is made as to whether the car stereo is in a state responsive to signals external to the car stereo. If a negative determination is made, step **106** is re-invoked.

If a positive determination is made in step **106,** a CD handling process, indicated as block **108,** is invoked, allowing the CD player/changer to exchange data and audio signals with any existing car stereo system. Beginning in step **110,** a signal is generated by the present invention indicating that a CD player/changer is present, and the signal is continuously transmitted to the car stereo. Importantly, this signal prevents the car stereo from shutting off, entering a sleep mode, or otherwise being unresponsive to signals and/or data from an external source. If the car radio is an OEM car radio, the CD player presence signal need not be generated. Further, the signal need not be limited to a CD player device presence signal, but rather, could be any type of device presence signal (*e.g.,* MP3 player device presence signal, satellite receiver presence signal, video device presence signal, cellular telephone presence signal, or any other type of device presence signal). Concurrently with step **110,** or within a short period of time before or after the execution of step **110,** steps **112** and **114** are invoked. In step **112,** the audio channels of the CD player/changer are connected (channeled) to the car stereo system, allowing audio from the CD player/changer to be played through the car stereo. In step **114,** data is retrieved by the present invention from the CD player/changer, including track and time information, formatted, and transmitted to the car stereo for display by the car stereo. Thus, information produced by the external CD player/changer can be quickly and conveniently viewed by a driver by merely viewing the display of the car stereo. After steps **110, 112,** and **114** have been executed, control passes to step **116.**

In steps **116,** the present invention monitors the control panel buttons of the car stereo for CD operational commands. Examples of such commands include track forward, track reverse, play, stop, fast forward, rewind, track program, random track play, and other similar commands. In step **118,** if a command is not detected, step **116** is re-invoked. Otherwise, if a command is received, step **118** invokes step **120,** wherein the received command is converted into a format recognizable by the CD player/changer connected to the present invention. For example, in this step, a command issued from a GM car radio is converted into a format recognizable by a CD player/changer manufactured by ALPINE, Inc. Any conceivable command from any type of car radio can be formatted for use by a CD player/changer of any type or manufacture. Once the command has been formatted, step **122** is invoked, wherein the formatted command is transmitted to the CD player/changer and executed. Step **110** is then re-invoked, so that additional processing can occur.

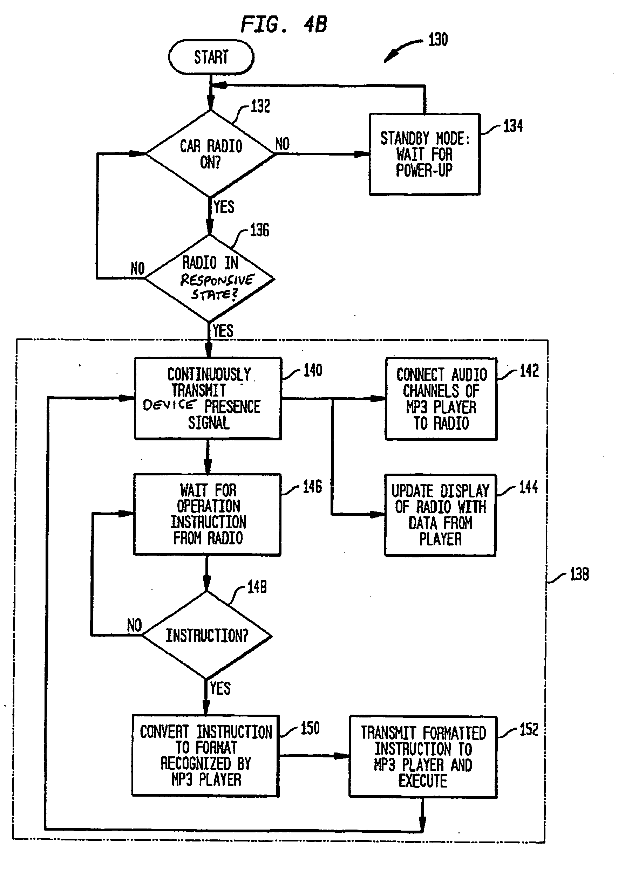

**FIG. 4b** is a flowchart showing processing logic, indicated generally at **130,** for integrating an MP3 player with an existing car stereo system. Examples of MP3 players that can be integrated by the present invention include, but are not limited to, the Apple iPod and other types of digital media devices. Beginning in step **132,** a determination is made as to whether the existing car stereo is powered on. If a negative determination is made, step **134** is invoked, wherein the present invention enters a standby mode and waits for the car stereo to be powered on. If a positive determination is made, step **136** is invoked, wherein a second determination is made as to whether the car stereo is in a state responsive to signals external to the car stereo. If a negative determination is made, step **136** is re-invoked.

If a positive determination is made in step **136,** an MP3 handling process, indicated as block **138,** is invoked, allowing the MP3 player to exchange data and audio signals with any existing car stereo system. Beginning in step **140,** a signal is generated by the present invention indicating that an MP3 player is present, and the signal is continuously transmitted to the car stereo. Importantly, this signal prevents the car stereo from shutting off, entering a sleep mode, or otherwise being unresponsive to signals and/or data from an external source. In step **142,** the audio channels of the MP3 player are connected (channeled) to the car stereo system, allowing audio from the MP3 player to be played through the car stereo. In step **144,** data is retrieved by the present invention from the MP3 player, including track, time, title, and song information, formatted, and transmitted to the car stereo for display by the car stereo. Thus, information produced by the MP3 player can be quickly and conveniently viewed by a driver by merely viewing the display of the car stereo. After steps **140, 142,** and **144** have been executed, control passes to step **146.**

In steps **146,** the present invention monitors the control panel buttons of the car stereo for MP3 operational commands. Examples of such commands include track forward, track reverse, play, stop, fast forward, rewind, track program, random track play, and other similar commands. In step **148,** if a command is not detected, step **146** is re-invoked. Otherwise, if a command is received, step **148** invokes step **150,** wherein the received command is converted into a format recognizable by the MP3 player connected to the present invention. For example, in this step, a command issued from a HONDA car radio is converted into a format recognizable by an MP3 player manufactured by PANASONIC, Inc. Any conceivable command from any type of car radio can be formatted for use by an MP3 player of any type or manufacture. Once the command has been formatted, step **152** is invoked, wherein the formatted command is transmitted to the MP3 player and executed. Step **140** is then re-invoked, so that additional processing can occur.

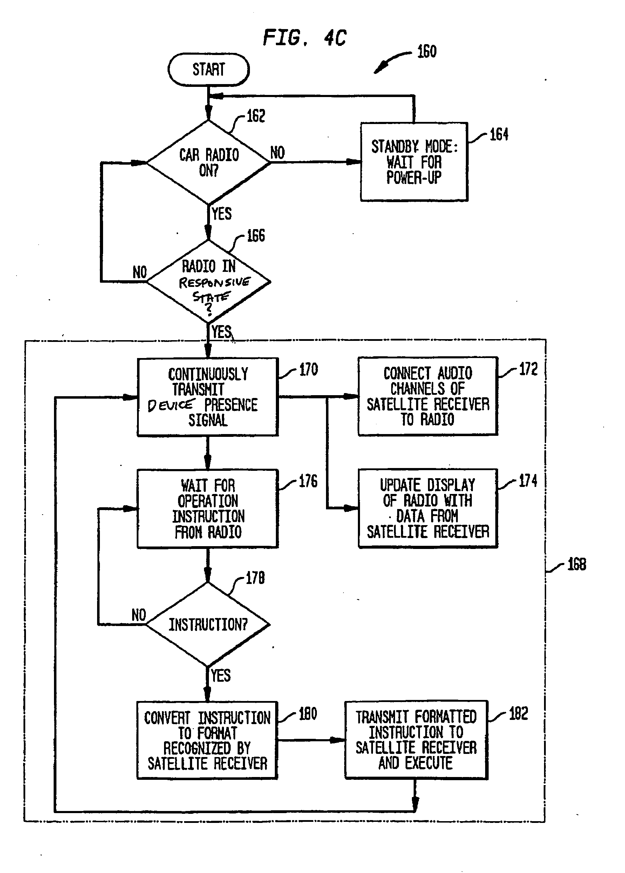

**FIG. 4c** is a flowchart showing processing logic, indicated generally at **160,** for integrating a satellite receiver or a DAB receiver with an existing car stereo system. Beginning in step **162,** a determination is made as to whether the existing car stereo is powered on. If a negative determination is made, step **164** is invoked, wherein the present invention enters a standby mode and waits for the car stereo to be powered on. If a positive determination is made, step **166** is invoked, wherein a second determination is made as to whether the car stereo is in a state responsive to signals external to the car stereo. If a negative determination is made, step **166** is re-invoked.

If a positive determination is made in step **166,** a satellite/DAB receiver handling process, indicated as block **168,** is invoked, allowing the satellite/DAB receiver to exchange data and audio signals with any existing car stereo system. Beginning in step **170,** a signal is generated by the present invention indicating that a satellite or DAB receiver is present, and the signal is continuously transmitted to the car stereo. Importantly, this signal prevents the car stereo from shutting off, entering a sleep mode, or otherwise being unresponsive to signals and/or data from an external source. In step **172,** the audio channels of the satellite/DAB receiver are connected (channeled) to the car stereo system, allowing audio from the satellite receiver or DAB receiver to be played through the car stereo. In step **174,** data is retrieved by the present invention from the satellite/DAB receiver, including channel number, channel name, artist name, song time, and song title, formatted, and transmitted to the car stereo for display by the car stereo. The information could be presented in one or more menus, or via a graphical interface viewable and manipulable by the user at the car stereo. Thus, information produced by the receiver can be quickly and conveniently viewed by a driver by merely viewing the display of the car stereo. After steps **170, 172,** and **174** have been executed, control passes to step **176.**

In steps **176,** the present invention monitors the control panel buttons of the car stereo for satellite/DAB receiver operational commands. Examples of such commands include station up, station down, station memory program, and other similar commands. In step **178,** if a command is not detected, step **176** is re-invoked. Otherwise, if a command is received, step **178** invokes step **180,** wherein the received command is converted into a format recognizable by the satellite/DAB receiver connected to the present invention. For example, in this step, a command issued from a FORD car radio is converted into a format recognizable by a satellite receiver manufactured by PIONEER, Inc. Any conceivable command from any type of car radio can be formatted for use by a satellite/DAB receiver of any type or manufacture. Once the command has been formatted, step **182** is invoked, wherein the formatted command is transmitted to the satellite/DAB receiver and executed. Step **170** is then re-invoked, so that additional processing can occur.

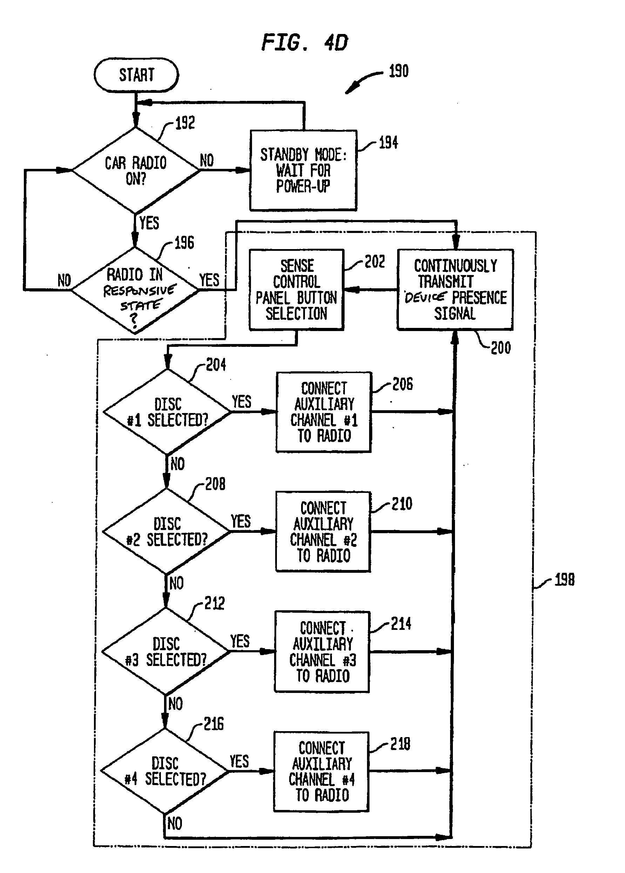

**FIG. 4d** is a flowchart showing processing logic, indicated generally at **190,** for integrating a plurality of auxiliary input sources with a car radio. Beginning in step **192,** a determination is made as to whether the existing car stereo is powered on. If a negative determination is made, step **194** is invoked, wherein the present invention enters a standby mode and waits for the car stereo to be powered on. If a positive determination is made, step **196** is invoked, wherein a second determination is made as to whether the car stereo is in a state responsive to signals external to the car stereo. If a negative determination is made, step **196** is re-invoked.

If a positive determination is made in step **196,** an auxiliary input handling process, indicated as block **198,** is invoked, allowing one or more auxiliary inputs to be connected (channeled) to the car stereo. Further, if a plurality of auxiliary inputs exist, the logic of block **198** allows a user to select a desired input from the plurality of inputs. Beginning in step **200,** a signal is generated by the present invention indicating that an external device is present, and the signal is continuously transmitted to the car stereo. Importantly, this signal prevents the car stereo from shutting off, entering a sleep mode, or otherwise being unresponsive to signals and/or data from an external source. Then, in step **202,** the control panel buttons of the car stereo are monitored.

In a preferred embodiment of the present invention, each of the one or more auxiliary input sources are selectable by selecting a CD disc number on the control panel of the car radio. Thus, in step **204,** a determination is made as to whether the first disc number has been selected. If a positive determination is made, step **206** is invoked, wherein the first auxiliary input source is connected (channeled) to the car stereo. If a negative determination is made, step **208** is invoked, wherein a second determination is made as to whether the second disc number has been selected. If a positive determination is made, step **210** is invoked, wherein the second auxiliary input source is connected (channeled) to the car stereo. If a negative determination is made, step **212** is invoked, wherein a third determination is made as to whether the third disc number has been selected. If a positive determination is made, step **214** is invoked, wherein the third auxiliary input source is connected (channeled) to the car stereo. If a negative determination is made, step **216** is invoked, wherein a fourth determination is made as to whether the fourth disc number has been selected. If a positive determination is made, step **218** is invoked, wherein the fourth auxiliary input source is connected (channeled) to the car stereo. If a negative determination is made, step **200** is re-invoked, and the process disclosed for block **198** repeated. Further, if any of steps **206, 210, 214,** or **218** are executed, then step **200** is re-invoked and block **198** repeated.

The process disclosed in block **198** allows a user to select from one of four auxiliary input sources using the control buttons of the car stereo. Of course, the number of auxiliary input sources connectable with and selectable by the present invention can be expanded to any desired number. Thus, for example, 6 auxiliary input sources could be provided and switched using corresponding selection key(s) or keystroke(s) on the control panel of the radio. Moreover, any desired keystroke, selection sequence, or button(s) on the control panel of the radio, or elsewhere, can be utilized to select from the auxiliary input sources without departing from the spirit or scope of the present invention.

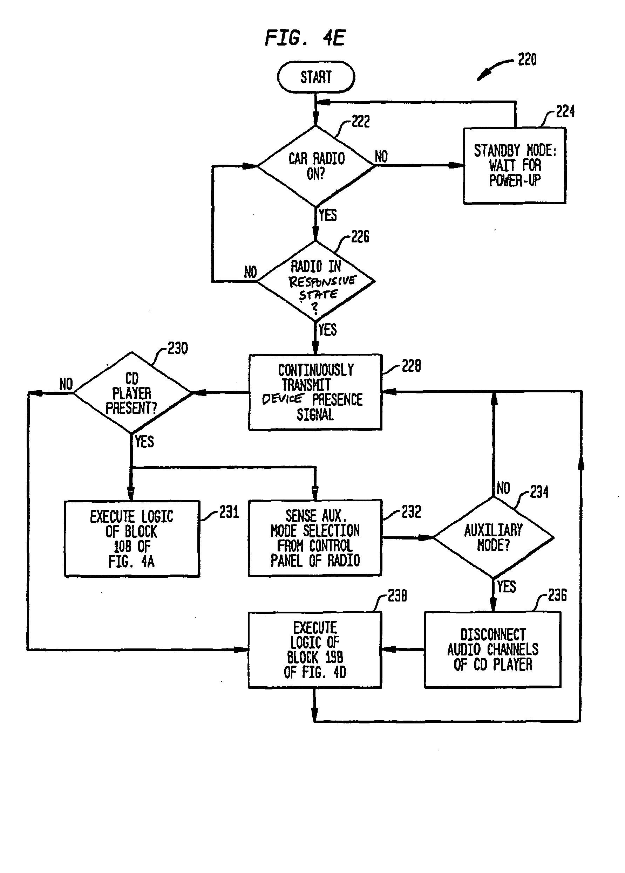

**FIG. 4e** is a flowchart showing processing logic, indicated generally at **220,** for integrating a CD player and one or more auxiliary input sources with a car radio. Beginning in step **222,** a determination is made as to whether the existing car stereo is powered on. If a negative determination is made, step **224** is invoked, wherein the present invention enters a standby mode and waits for the car stereo to be powered on. If a positive determination is made, step **226** is invoked, wherein a second determination is made as to whether the car stereo is in a state responsive to signals external to the cars stereo. If a negative determination is made, step **226** is re-invoked.

If a positive determination is made in step **226,** then step **228** is invoked, wherein a signal is generated by the present invention indicating that an external device is present, and the signal is continuously transmitted to the car stereo. Importantly, this signal prevents the car stereo from shutting off, entering a sleep mode, or otherwise being unresponsive to signals and/or data from an external source. Then, in step **230,** a determination is made as to whether a CD player is present (i.e., whether an external CD player or changer is connected to the multimedia device integration system of the present invention). If a positive determination is made, steps **231** and **232** are invoked. In step **231,** the logic of block **108** of **FIG. 4a** (the CD handling process), described earlier, is invoked, so that the CD player/changer can be integrated with the car stereo and utilized by a user. In step **232,** a sensing mode is initiated, wherein the present invention monitors for a selection sequence (as will be discussed in greater detail) initiated by the user at the control panel of the car stereo for switching from the external CD player/changer to one or more auxiliary input sources. Step **234** is then invoked, wherein a determination is made as to whether such a sequence has been initiated. If a negative determination is made, step **234** re-invokes step **228,** so that further processing can occur. Otherwise, if a positive determination is made *(i.e.,* the user desires to switch from the external CD player/changer to one of the auxiliary input sources), step **236** is invoked, wherein the audio channels of the CD player/changer are disconnected from the car stereo. Then, step **238** is invoked, wherein the logic of block **198** of **FIG. 4d** (the auxiliary input handling process), discussed earlier, is executed, allowing the user to select from one of the auxiliary input sources. In the event that a negative determination is made in step **230** (no external CD player/changer is connected to the present invention), then step **238** is invoked, and the system goes into auxiliary mode. The user can then select from one or more auxiliary input sources using the controls of the radio.

**FIG. 4f** is a flowchart showing processing logic, indicated generally at **240,** for integrating a satellite receiver or DAB receiver and one or more auxiliary input sources with a car radio. Beginning in step **242,** a determination is made as to whether the existing car stereo is powered on. If a negative determination is made, step **244** is invoked, wherein the present invention enters a standby mode and waits for the car stereo to be powered on. If a positive determination is made, step **246** is invoked, wherein a second determination is made as to whether the car stereo is in a state responsive to signals external to the car stereo. If a negative determination is made, step **246** is re-invoked.

If a positive determination is made in step **246,** then step **248** is invoked, wherein a signal is generated by the present invention indicating that an external device is present, and the signal is continuously transmitted to the car stereo. Importantly, this signal prevents the car stereo from shutting off, entering a sleep mode, or otherwise being unresponsive to signals and/or data from an external source. Then, in step **250,** a determination is made as to whether a satellite receiver or DAB receiver is present (i.e., whether an external satellite receiver or DAB receiver is connected to the multimedia device integration system of the present invention). If a positive determination is made, steps **251** and **252** are invoked. In step **251,** the logic of block **168** of **FIG. 4c** (the satellite/DAB receiver handling process), described earlier, is invoked, so that the satellite receiver can be integrated with the car stereo and utilized by a user. In step **252,** a sensing mode is initiated, wherein the present invention monitors for a selection sequence (as will be discussed in greater detail) initiated by the user at the control panel of the car stereo for switching from the external satellite receiver to one or more auxiliary input sources. Step **254** is then invoked, wherein a determination is made as to whether such a sequence has been initiated. If a negative determination is made, step **254** re-invokes step **258,** so that further processing can occur. Otherwise, if a positive determination is made *(i.e.,* the user desires to switch from the external satellite/DAB receiver to one of the auxiliary input sources), step **256** is invoked, wherein the audio channels of the satellite receiver are disconnected from the car stereo. Then, step **258** is invoked, wherein the logic of block **198** of **FIG. 4d** (the auxiliary input handling process), discussed earlier, is executed, allowing the user to select from one of the auxiliary input sources. In the event that a negative determination is made in step **250** (no external satellite/DAB receiver is connected to the present invention), then step **258** is invoked, and the system goes into auxiliary mode. The user can then select from one or more auxiliary input sources using the controls of the radio.

**FIG. 4g** is a flowchart showing processing logic according to the present invention for integrating an MP3 player and one or more auxiliary input sources with a car stereo. Beginning in step **262,** a determination is made as to whether the existing car stereo is powered on. If a negative determination is made, step **264** is invoked, wherein the present invention enters a standby mode and waits for the car stereo to be powered on. If a positive determination is made, step **266** is invoked, wherein a second determination is made as to whether the car stereo is in a state responsive to signals external to the car stereo. If a negative determination is made, step **266** is re-invoked.

If a positive determination is made in step **266,** then step **268** is invoked, wherein a signal is generated by the present invention indicating that an external device is present, and the signal is continuously transmitted to the car stereo. Importantly, this signal prevents the car stereo from shutting off, entering a sleep mode, or otherwise being unresponsive to signals and/or data from an external source. Then, in step **270,** a determination is made as to whether an MP3 player is present (i.e., whether an external MP3 player is connected to the multimedia device integration system of the present invention). If a positive determination is made, steps **271** and **272** are invoked. In step **271,** the logic of block **138** of **FIG. 4b** (the MP3 handling process), described earlier, is invoked, so that the MP3 player can be integrated with the car stereo and utilized by a user. In step **272,** a sensing mode is initiated, wherein the present invention monitors for a selection sequence (as will be discussed in greater detail) initiated by the user at the control panel of the car stereo for switching from the external MP3 player to one or more auxiliary input sources. Step **274** is then invoked, wherein a determination is made as to whether such a sequence has been initiated. If a negative determination is made, step **274** re-invokes step **278,** so that further processing can occur. Otherwise, if a positive determination is made (i.e., the user desires to switch from the external MP3 player to one of the auxiliary input sources), step **276** is invoked, wherein the audio channels of the MP3 player are disconnected from the car stereo. Then, step **278** is invoked, wherein the logic of block **198** of **FIG. 4d** (the auxiliary input handling process), discussed earlier, is executed, allowing the user to select from one of the auxiliary input sources. In the event that a negative determination is made in step **270** (no external MP3 player is connected to the present invention), then step **278** is invoked, and the system goes into auxiliary mode. The user can then select from one or more auxiliary input sources using the controls of the radio.

As mentioned previously, to enable integration, the present invention contains logic for converting command signals issued from an after-market or OEM car stereo into a format compatible with one or more external audio devices connected to the present invention. Such logic can be applied to convert any car stereo signal for use with any external device. For purposes of illustration, a sample code portion is shown in **Table 1,** below, for converting control signals from a BMW car stereo into a format understandable by a CD changer:

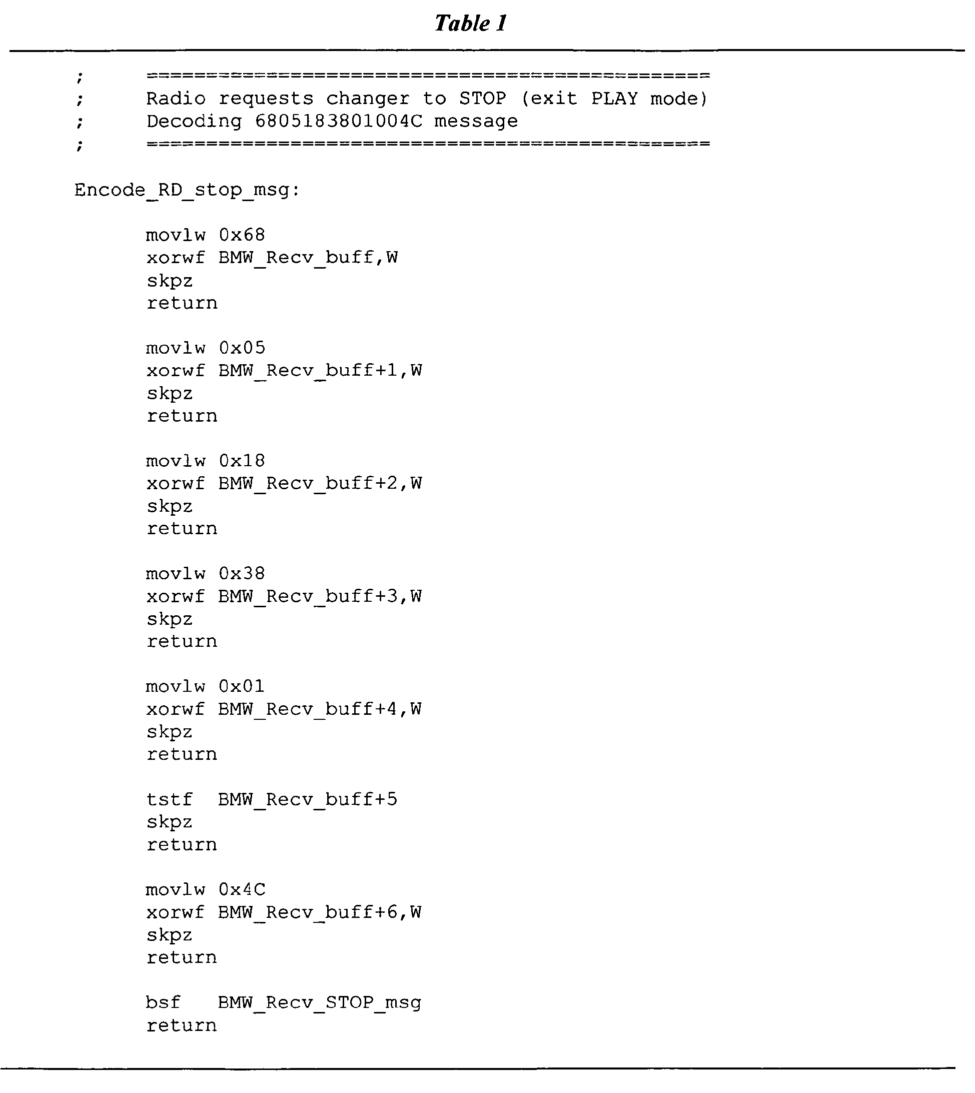

The code portion shown in **Table 1** receives a STOP command issued by a BMW stereo, in a format proprietary to BMW stereos. Preferably, the received command is stored in a first buffer, such as BMW_Recv_buff. The procedure "Encode_RD_stop_msg" repetitively applies an XOR function to the STOP command, resulting in a new command that is in a format compatible with the after-market CD player. The command is then stored in an output buffer for dispatching to the CD player.

Additionally, the present invention contains logic for retrieving information from an after-market audio device, and converting same into a format compatible with the car stereo for display thereby. Such logic can be applied to convert any data from the external device for display on the car stereo. For purposes of illustration, a sample code portion is shown in **Table 2,** below, for converting data from a CD changer into a format understandable by a BMW car stereo:

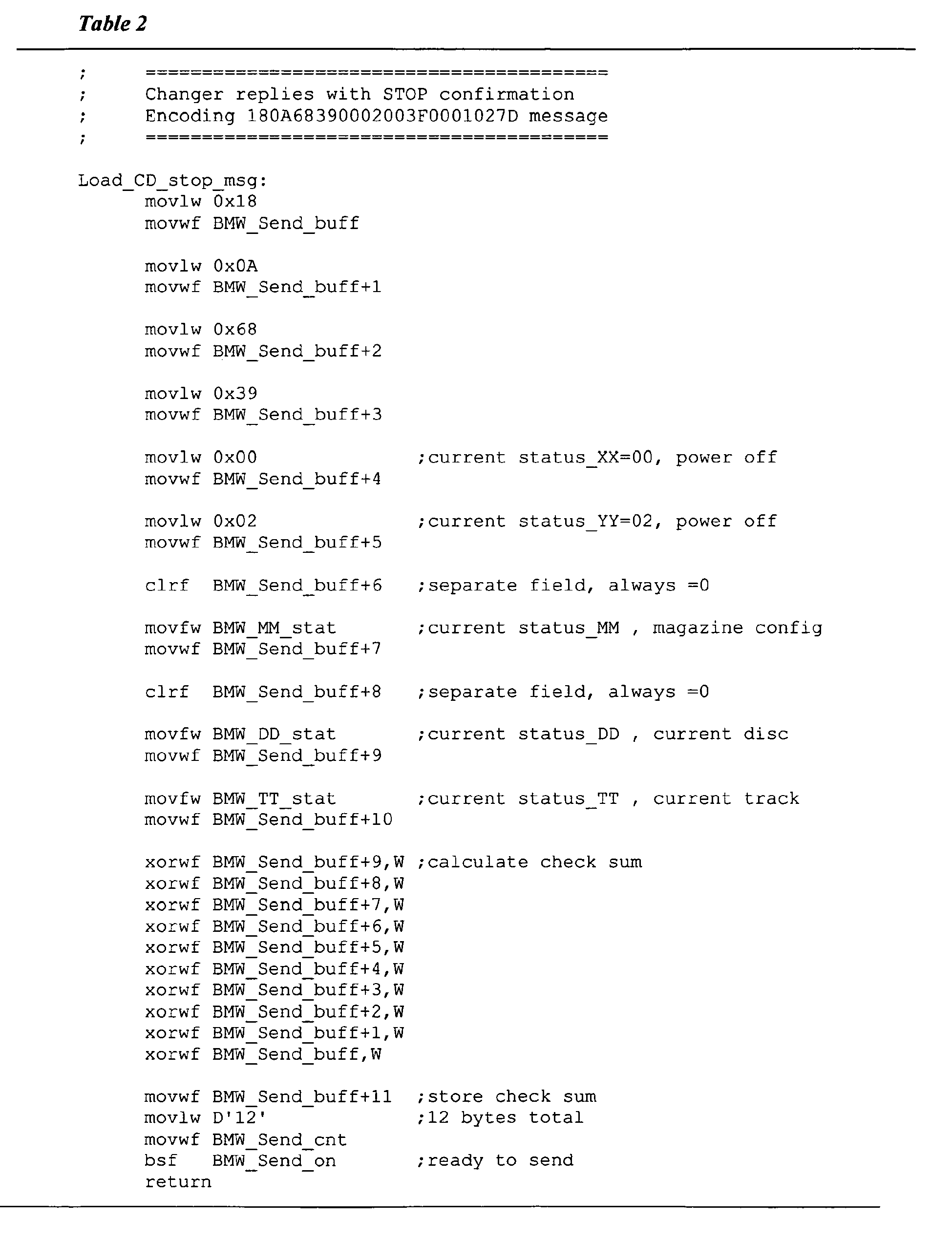

The code portion shown in **Table 2** receives a STOP confirmation message from the CD player, in a format proprietary to the CD player. Preferably, the received command is stored in a first buffer, such as BMW_Send_buff. The procedure "Load_CD_stop_msg" retrieves status information, magazine information, current disc, and current track information from the CD changer, and constructs a response containing this information. Then, a checksum is calculated and stored in another buffer. The response and checksum are in a format compatible with the BMW stereo, and are ready for dispatching to the car stereo.

The present invention also includes logic for converting signals from an OEM car stereo system for use with a digital media device such as an MP3, MP4, or Apple iPod player. Shown below are code samples for allowing commands and data to be exchanged between a Ford car stereo and an Apple iPod device:

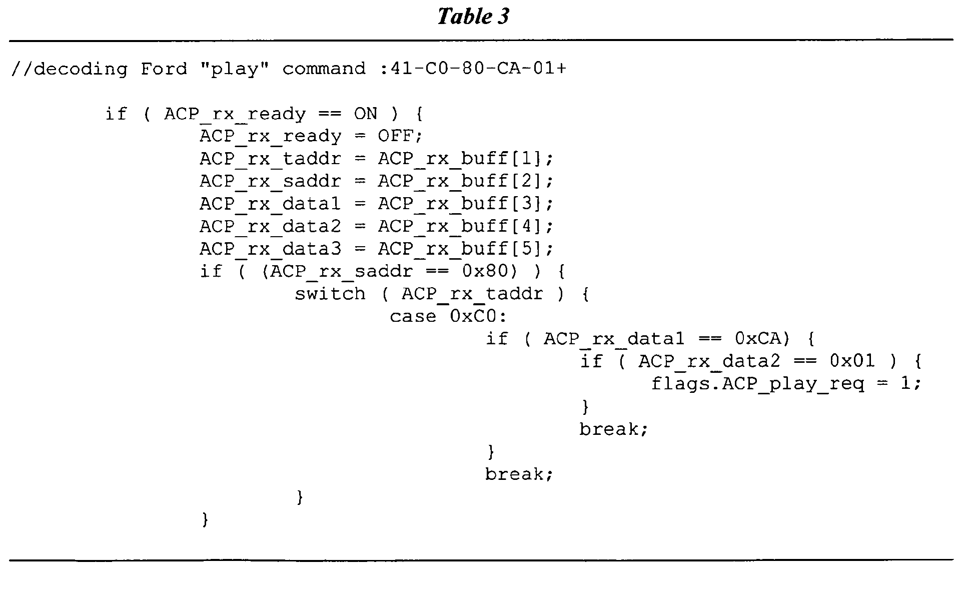

In the code portion shown in **Table 3,** a "Play" command selected by a user at the controls of a Ford OEM car stereo is received, and portions of the command are stored in one or more buffer arrays. Then, as shown below in **Table 4,** the decoded portions of the command stored in the one or more buffer arrays are used to construct a "Play/Pause" command in a format compatible with the Apple iPod device, and the command is sent to the Apple iPod for execution thereby:

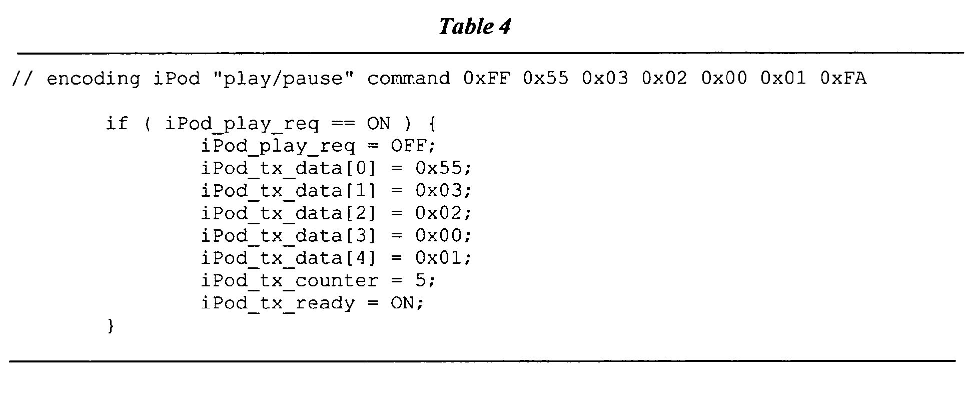

While the code portions shown in **Tables 1-2** are implemented using assembler language, and the code portions shown in **Tables 3-4** are implemented using the C programming language, it is to be expressly understood that any low or high level language known in the art could be utilized without departing from the spirit or scope of the invention. It will be appreciated that various other code portions can be developed for converting signals from any after-market or OEM car stereo for use by an after-market external audio device, and vice versa.

**FIG. 5** is a flowchart showing processing logic, indicated generally at **300** for allowing a user to switch between an after-market audio device, and one or more auxiliary input sources. As was discussed earlier, the present invention allows a user to switch from one or more connected audio devices, such as an external CD player/changer, MP3 player, satellite receiver, DAB receiver, or the like, and activate one or more auxiliary input sources. A selection sequence, initiated by the user at the control panel of the car stereo, allows such switching. Beginning in step **302,** the buttons of the control panel are monitored. In step **304,** a determination is made as to whether a "Track Up" button or sequence has been initiated by the user. The "Track Up" button or sequence can for a CD player, MP3 player, or any other device. If a negative determination is made, step **306** is invoked, wherein the sensed button or sequence is processed in accordance with the present invention and dispatched to the external audio device for execution. Then, step **302** is re-invoked, so that additional buttons or sequences can be monitored.

In the event that a positive determination is made in step **304,** step **308** is invoked, wherein the present invention waits for a predetermined period of time while monitoring the control panel buttons for additional buttons or sequences. In a preferred embodiment of the present invention, the predetermined period of time is 750 milliseconds, but of course, other time durations are considered within the spirit and scope of the present invention. In step **310,** a determination is made as to whether the user has initiated a "Track Down" button or sequence at the control panel of the car stereo within the predetermined time period. These sequences can be used for a CD player, MP3 player, or any other device. If a negative determination is made, step **312** is invoked. In step **312,** a determination is made as to whether a timeout has occurred (e.g., whether the predetermined period of time has expired). If a negative determination is made, step **308** is re-invoked. Otherwise, is a positive determination is made, step **312** invokes step **306,** so that any buttons or key sequences initiated by the user that are not a "Track Down" command are processed in accordance with the present invention and dispatched to the audio device for execution.

In the event that a positive determination is made in step **310** (a "Track Down" button or sequence has been initiated within the predetermined time period), then step **314** is invoked. In step **314,** the audio channels of the audio device are disconnected, and then step **316** is invoked. In step **316,** the logic of block **198** of **FIG. 4d** (the auxiliary input handling process), discussed earlier, is invoked, so that the user can select from one of the auxiliary input sources in accordance with the present invention. Thus, at this point in time, the system has switched, under user control, from the audio device to a desired auxiliary input. Although the foregoing description of the process **300** has been described with reference to "Track Up" and "Track Down" buttons or commands initiated by the user, it is to be expressly understood that any desired key sequence, keystroke, button depress, or any other action, can be sensed in accordance with the present invention and utilized for switching modes.

When operating in auxiliary mode, the present invention provides an indication on the display of the car stereo corresponding to such mode. For example, the CD number could be displayed as "1", and the track number displayed as "99," thus indicating to the user that the system is operating in auxiliary mode and that audio and data is being supplied from an auxiliary input source. Of course, any other indication could be generated and displayed on the display of the car stereo, such as a graphical display *(e.g.,* an icon) or textual prompt.

**FIG. 6** is a flowchart showing processing logic, indicated generally at **320,** for determining and handling various device types connected to the auxiliary input ports of the invention. The present invention can sense device types connected to the auxiliary input ports, and can integrate same with the car stereo using the procedures discussed earlier. Beginning in step **322,** the control panel buttons of the car stereo are monitored for a button or sequence initiated by the user corresponding to an auxiliary input selection (such as the disc number method discussed earlier with reference to **FIG. 4d).** In response to an auxiliary input selection, step **324** is invoked, wherein the type of device connected to the selected auxiliary input is sensed by the present invention. Then, step **326** is invoked.

In step **326,** a determination is made as to whether the device connected to the auxiliary input is a CD player/changer. If a positive determination is made, step **328** is invoked, wherein the logic of block **108** of **FIG. 4a** (the CD handling process), discussed earlier, is executed, and the CD player is integrated with the car stereo. If a negative determination is made in step **326,** then step **330** is invoked. In step **330,** a determination is made as to whether the device connected to the auxiliary input is an MP3 player. If a positive determination is made, step **334** is invoked, wherein the logic of block **138** if FIG. **4b** (the MP3 handling process), discussed earlier, is executed, and the MP3 player is integrated with the car stereo. If a negative determination is made in step **330,** then step **336** is invoked. In step **336,** a determination is made as to whether the device connected to the auxiliary input is a satellite receiver or a DAB receiver. If a positive determination is made, step **338** is invoked, wherein the logic of block **168** of **FIG. 4c** (the satellite/DAB receiver handling process), discussed earlier, is executed, and the satellite receiver is integrated with the car stereo. If a negative determination is made in step **336,** step **322** is re-invoked, so that additional auxiliary input selections can be monitored and processed accordingly. Of course, process **320** can be expanded to allow other types of devices connected to the auxiliary inputs of the present invention to be integrated with the car stereo.

The present invention can be expanded for allowing video information generated by an external device to be integrated with the display of an existing OEM or after-market car stereo. In such a mode, the invention accepts RGB (red/green/blue) input signals from the external device, and converts same to composite signals. The composite signals are then forwarded to the car stereo for display thereby, such as on an LCD panel of the stereo. Additionally, the present invention can accept composite input signals from an external device, and convert same to RGB signals for display on the car stereo. Further, information from the external device can be formatted and presented to the user in one or more graphical user interfaces or menus capable of being viewed and manipulated on the car stereo.

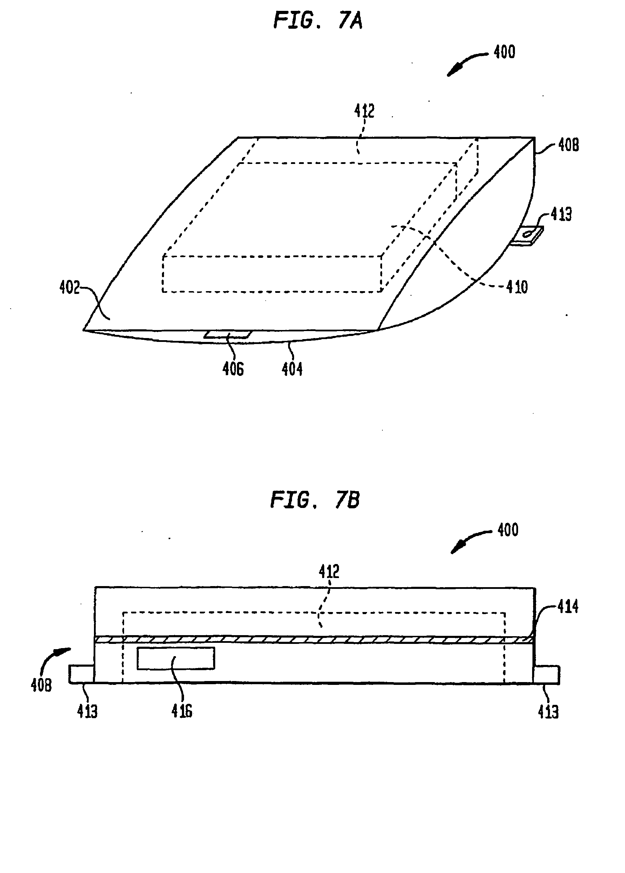

**FIG. 7a** is a perspective view of a docking station **400** according to the present invention for retaining an audio device within a car. Importantly, the present invention can be adapted to allow portable audio devices to be integrated with an existing car stereo. The docking station **400** allows such portable devices to be conveniently docked and integrated with the car stereo. The docking station **400** includes a top portion **402** hingedly connected at a rear portion **408** to a bottom portion **404,** preferably in a clam-like configuration. A portable audio device **410,** such as the SKYFI radio distributed by DELPHI, Inc., is physically and electrically connected with the docking portion **412,** and contained within the station **100.** A clasp **406** can be provided for holding the top and bottom portions in a closed position to retain the device **410.** Optionally, a video device could also be docked using the docking station **400,** and tabs **413** can be provided for holding the docking station **400** in place against a portion of a car. Conceivably, the docking station **400** could take any form, such as a sleeve-like device for receiving and retaining a portable audio device and having a docking portion for electrically and mechanically mating with the audio device.

**FIG. 7b** is an end view showing the rear portion **408** of the docking station **400** of **FIG. 7a.** A hinge **414** connects the top portion and the bottom portions of the docking station **400.** A data port **416** is provided for interfacing with the audio device docked within the station **400,** and is in electrical communication therewith. In a preferred embodiment of the present invention, the data port **416** is an RS-232 serial or USB data port that allows for the transmission of data with the audio device, and which connects with the multimedia device integration system of the present invention for integrating the audio device with an OEM or after-market car stereo. Any known bus technology can be utilized to interface with any portable audio or video device contained within the docking station **400,** such as FIREWIRE, D2B, MOST, CAN, USB/USB2, IE Bus, T Bus, I Bus, or any other bus technology known in the art. It should be noted that the present invention can be operated without a docking station, *i.e.,* a portable audio or video device can be plugged directly into the present invention for integration with a car stereo or video system.

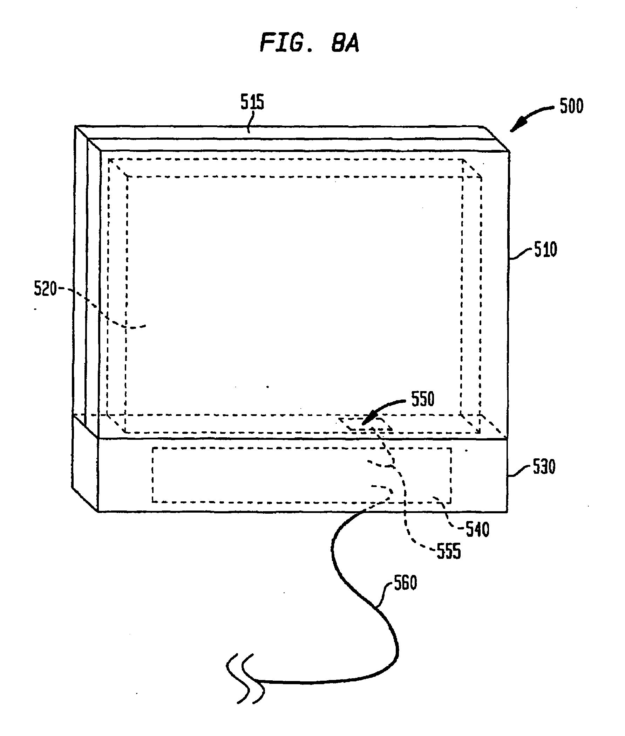

**FIGS. 8a-8b** are perspective views of another embodiment of the docking station of the present invention, indicated generally at **500,** which includes the multimedia device integration system of the present invention, indicated generally at **540,** incorporated therewith. As shown in **FIG. 8a,** the docking station **500** includes a base portion **530,** a bottom member **515** interconnected with the base portion **530** at an edge thereof, and a top member **510** hingedly interconnected at an edge to the base portion **530.** The top member **510** and the bottom member **515** define a cavity for docking and storing a portable audio device **520,** which could be a portable CD player, MP3 player, satellite (e.g., XM, SIRIUS, or other type) tuner, or any other portable audio device. The docking station **500** would be configured to accommodate a specific device, such as an IPOD from Apple Computer, Inc., or any other portable device.

The multimedia device integration system **540,** in the form of a circuit board, is housed within the base portion **530** and performs the integration functions discussed herein for integrating the portable device **520** with an existing car stereo or car video system. The integration system **540** is in communication with the portable device **520** via a connector **550,** which is connected to a port on the device **520,** and a cable **555** interconnected between the connector **550** and the integration system **540.** The connector **550** could be any suitable connector and can vary according to the device type. For example, a MOLEX, USB, or any other connector could be used, depending on the portable device. The integration system **540** is electrically connected with a car stereo or car video system by cable **560.** Alternatively, the integration system could wirelessly communicate with the car stereo or car video system. A transmitter could be used at the integration system to communicate with a receiver at the car stereo or car video system. Where automobiles include Bluetooth systems, such systems can be used to communicate with the integration system. As can be readily appreciated, the docking station **500** provides a convenient device for docking, storing, and integrating a portable device for use with a car stereo. Further, the docking station **500** could be positioned at any desired location within a vehicle, including, but not limited to, the vehicle trunk.

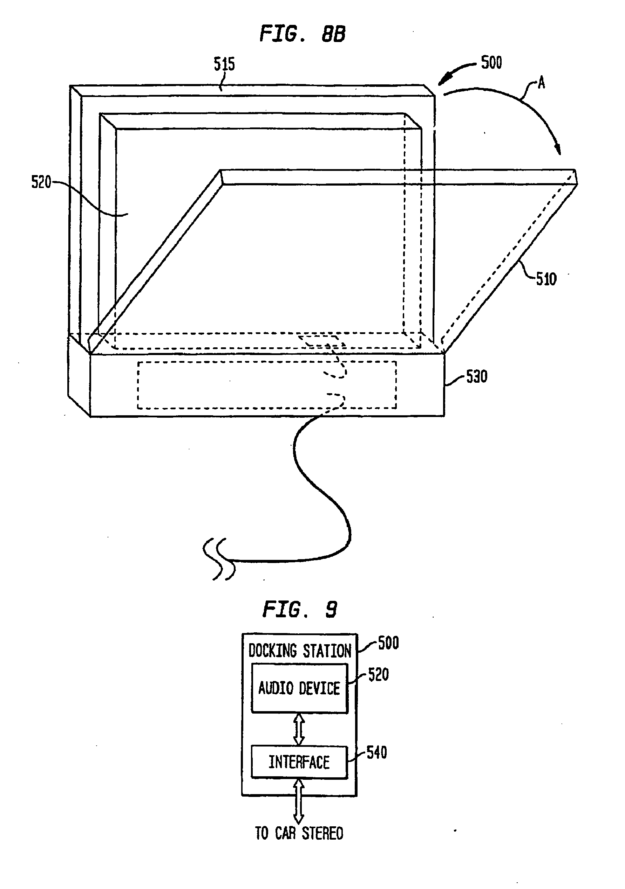

As shown in **FIG. 8b,** the top member **510** can be opened in the general direction indicated by arrow A to allow for access to the portable audio device **520.** In this fashion, the device **520** can be quickly accessed for any desired purpose, such as for inserting and removing the device **520** from the docking station **500,** as well as for providing access to the controls of the device **520.**

**FIG. 9** is a block diagram showing the components of the docking station of **FIGS. 8a-8b.** The docking station **500** houses both a portable audio or video device **520** and a multimedia device integration system (or interface) **540.** The shape and configuration of the docking station **500** can be varied as desired without departing from the spirit or scope of the present invention.

The integration system of the present invention provides for control of a portable audio or video device, or other device, through the controls of the car stereo or video system system. As such, controls on the steering wheel, where present, may also be used to control the portable audio device or other device. Further, in all embodiments of the present invention, communication between the after-market device and a car stereo or video system can be accomplished using known wireless technologies, such as Bluetooth.

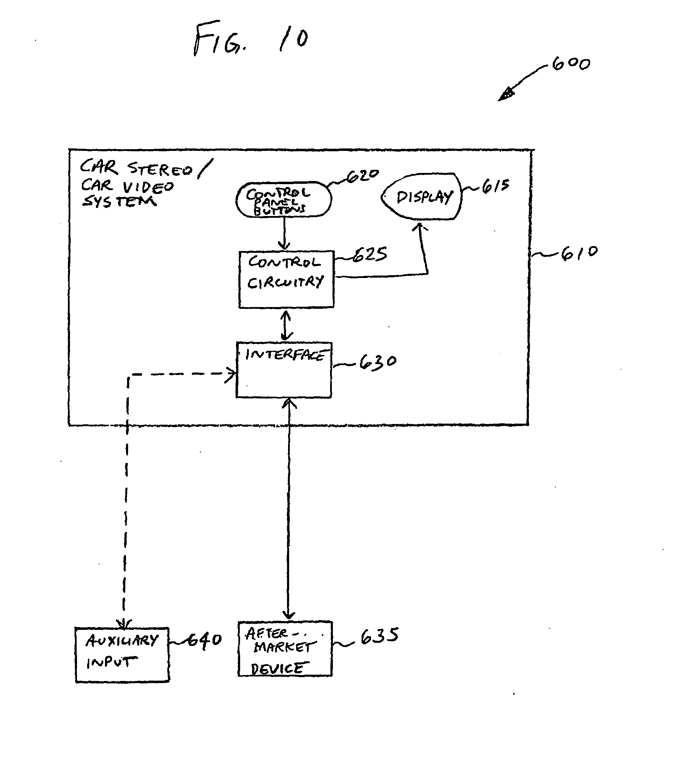

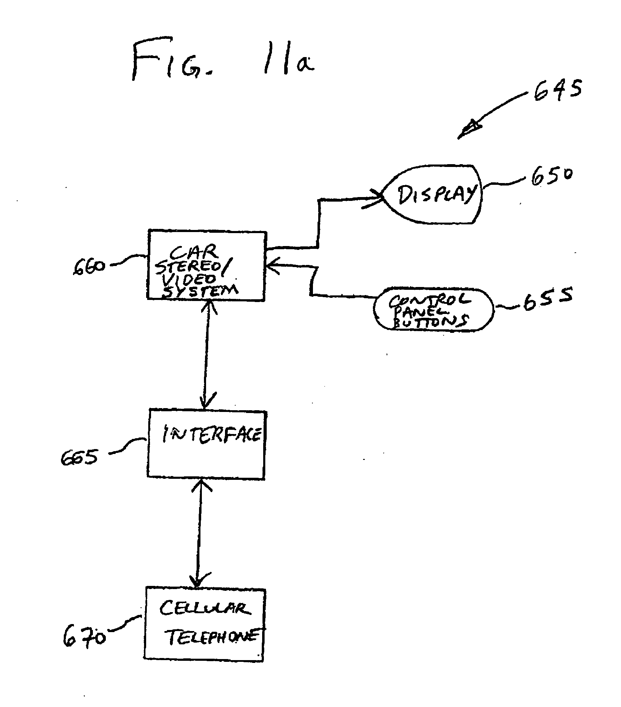

**FIG. 10** is a block diagram showing an alternate embodiment of the multimedia device integration system of the present invention, indicated generally at **600,** wherein the interface **630** is incorporated within a car stereo or car video system **610.** The interface **630** is in electrical communication with the control panel buttons **620,** display **615,** and associated control circuitry **625** of the car stereo or video system **610.** The interface **630** could be manufactured on a separate printed circuit board positioned within the stereo or video system **610,** or on one or more existing circuit boards of the stereo or video system **610.** An after-market device **635** can be put into electrical communication with the interface **630** via a port or connection on the car stereo or video system **610,** and integrated for use with the car stereo or video system **610.**

The device **635** can be controlled using the control panel buttons **620** of the car stereo or video system **610,** and information from the device **635** is formatted by the interface **630** and displayed in the display **615** of the car stereo or video system **610.** Additionally, control commands generated at the car stereo or car video device **610** are converted by the interface **630** into a format (protocol) compatible with the multimedia device **635,** and are dispatched thereto for execution. A plurality of multimedia devices could be intergrated using the interface **630,** as well as one or more auxiliary input sources **640.** The after-market device **635** could comprise any audio, video, or telecommunications device, including, but not limited to, a CD player, CD changer, digital media player (e.g., MP3 player, MP4 player, WMV player, Apple iPod, or any other player), satellite radio *(e.g.,* XM, Sirius, Delphi, etc.), video device (e.g., DVD player), cellular telephone, or any other type of device or combinations thereof. Additionally, one or more interfaces could be connected to the interface **630** ("daisy-chained") to allow multiple products to be integrated. The device **600** could include one or more of the circuits disclosed in **FIGS. 3a-3d** and modified depending upon the type of the after-market device **635.**

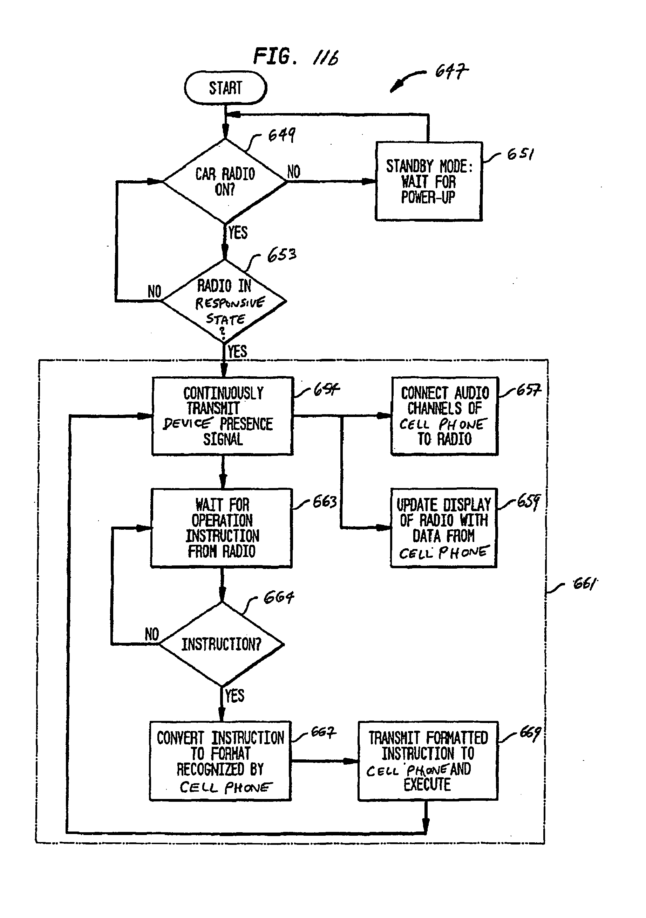

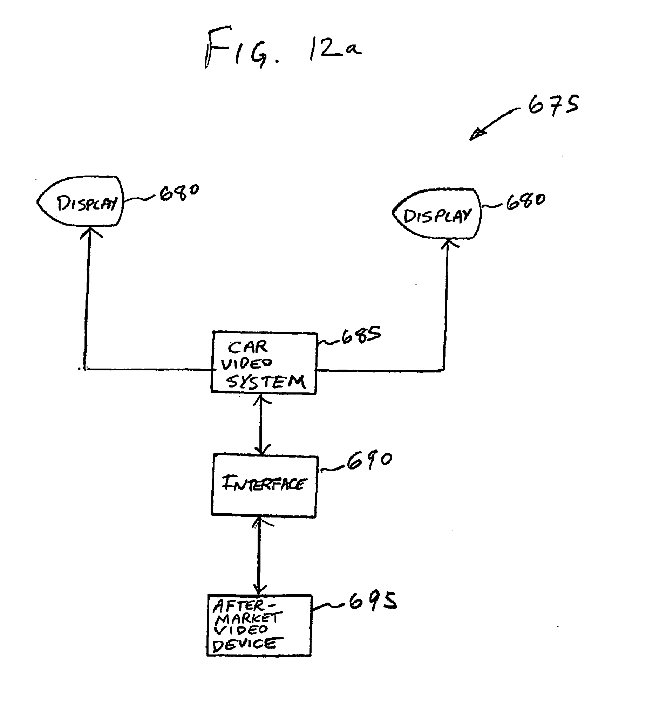

**FIG. 11a** is a diagram showing an alternate embodiment of the present invention, indicated generally at **645,** wherein a cellular telephone **670** is intergrated for use with a car stereo. The telephone **670** is in electrical communication with the interface **665,** which receives data from the cellular telephone and formats same for displaying on the display **650** of the car stereo or video system **660.** Commands for controlling the telephone **670** can be entered using the control panel buttons **655** of the car stereo or video system **660.** The commands are processed by the interface **665,** converted into a format (protocol) compatible with the telephone **670,** and transmitted to the telephone **670** for processing thereby. Additionally, audio from the telephone **670** can be channeled to the car stereo or video system **660** via the interface **665** and played through the speakers of the car stereo or video system **660.** For example, if the telephone **670** is provided with the ability to download songs or music, such songs or music can be selected using the car stereo or video system **660** and played therethrough using the interface **665.** It should be noted that control of the cellular telephone could be provided using one or more displays (e.g., LCD) of a car video system. Moreover, control of the cellular telephone **670** is not limited to the use of buttons on the car stereo or video system **660,** and indeed, a software or graphically-driven menu or interface can be used to control the cellular telephone. The device 645 could include one or more of the circuits disclosed in **FIGS. 3a-3d** and modified for use with the cellular telephone **670.**

**FIG. 11b** is a flowchart showing processing logic, indicated generally at **647,** for integrating a cellular telephone with a car radio. Beginning in step **649,** a determination is made as to whether the existing car stereo is powered on. If a negative determination is made, step **651** is invoked, wherein the present invention enters a standby mode and waits for the car stereo to be powered on. If a positive determination is made, step **653** is invoked, wherein a second determination is made as to whether the car stereo is in a state responsive to signals external to the car stereo. If a negative determination is made, step **649** is re-invoked.

If a positive determination is made in step **653,** a cellular telephone handling process, indicated as block **661,** is invoked. Beginning in step **654,** a signal is generated by the present invention indicating that a cellular telephone is present, and the signal is continuously transmitted to the car stereo. Importantly, this signal prevents the car stereo from shutting off, entering a sleep mode, or otherwise being unresponsive to signals and/or data from an external source. In step **657,** the audio channels of the cellular telephone are connected (channeled) to the car stereo system, allowing audio from the cellular telephone to be played through the car stereo. In step **659,** data is retrieved by the present invention from the cellular telephone, such as song information corresponding to one or more songs downloaded onto the cellular telephone. After steps **654, 657,** and **659** have been executed, control passes to step **663.**

In steps **663,** the present invention monitors the control panel buttons of the car stereo for cellular telephone operational commands. In step **664,** if a command is not detected, step **663** is re-invoked. Otherwise, if a command is received, step **663** invokes step **667,** wherein the received command is converted into a format recognizable by the cellular telephone connected to the present invention. Once the command has been formatted, step **669** is invoked, wherein the formatted command is transmitted to the cellular telephone and executed. Step **654** is then re-invoked, so that additional processing can occur.

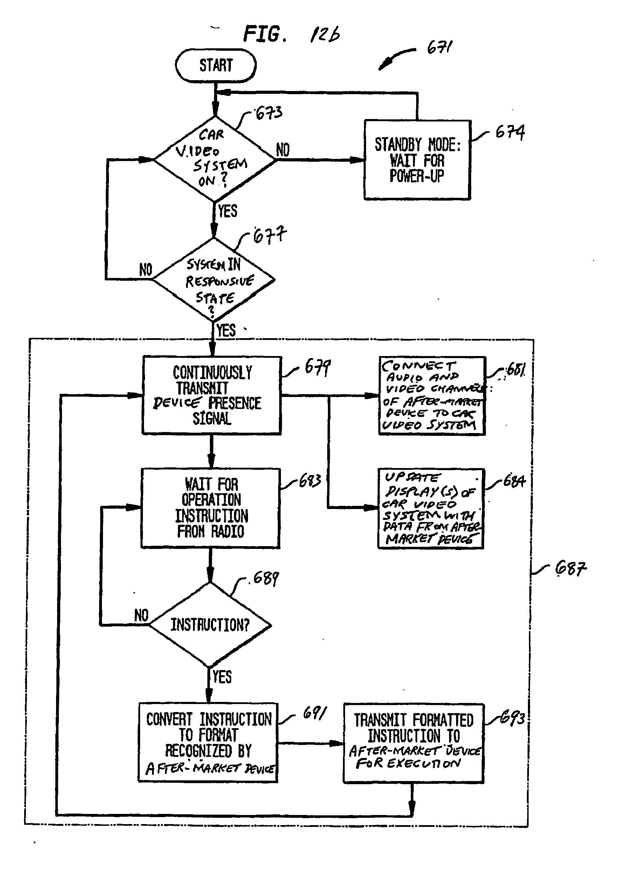

FIG. **12a** is a diagram showing an alternate embodiment of the present invention, indicated generally at **675,** wherein an after-market video device **695** is integrated for use with a car video system **685.** The after-market video device **695** could comprise a portable DVD player, digital video (DV) camera, digital camera, or any other video device. The interface **690** receives output video signals from the device **695,** and converts same for display on one or more displays **680** (e.g., LCD seat-back displays in a minivan, fold-down displays mounted on the roof of a vehicle, vehicle navigation displays, etc.) of the car video system **685.** The interface **690** could convert between composite and red/green/blue (RGB) video signals, and vice versa, using commercially-available video format conversion chips such as the TDA8315, TDA4570, TDA3567, TDA3566A, and TDA3569A video conversion chips manufactured by Philips Corp., and the AL251 and AL250 video conversion chips manufactured by Averlogic Technologies, Inc., or any other suitable video conversion chips. Commands issued by a user using the car video system **685** or display(s) **680** for controlling the device **695** are received by the interface **690,** converted into a format compatible with the device **695,** and transmitted thereto for processing. The device **675** could include one or more of the circuits disclosed in **FIGS. 3a-3d** and modified for use with the video device **695.**

**FIG. 12b** is a flowchart showing processing logic, indicated generally at **671,** for integrating an after-market video device with a car video system. Beginning in step **673,** a determination is made as to whether the existing car video system is powered on. If a negative determination is made, step **674** is invoked, wherein the present invention enters a standby mode and waits for the car video system to be powered on. If a positive determination is made, step **677** is invoked, wherein a second determination is made as to whether the car video system is in a state responsive to signals external to the car video system. If a negative determination is made, step **673** is re-invoked.

If a positive determination is made in step **677,** an after-market video device handling process, indicated as block **687,** is invoked. Beginning in step **679,** a signal is generated by the present invention indicating that an external device is present, and the signal is continuously transmitted to the car video system. Importantly, this signal prevents the car video system from shutting off, entering a sleep mode, or otherwise being unresponsive to signals and/or data from an external source. In step **681,** the audio and video channels of the after-market device are connected (channeled) to the car video system, allowing audio and video from the after-market device to be played through the car video system. In step **684,** the display(s) of the car video system are updated with data from the after-market device. After steps **679, 681,** and **684** have been executed, control passes to step **683.**

In step **683,** the present invention monitors the car video system for after-market video device operational commands. In step **689,** if a command is not detected, step **683** is re-invoked. Otherwise, if a command is received, step **689** invokes step **691,** wherein the received command is converted into a format recognizable by the after-market video device connected to the present invention. Once the command has been formatted, step **693** is invoked, wherein the formatted command is transmitted to the after-market video device and executed. Step **679** is then re-invoked, so that additional processing can occur.

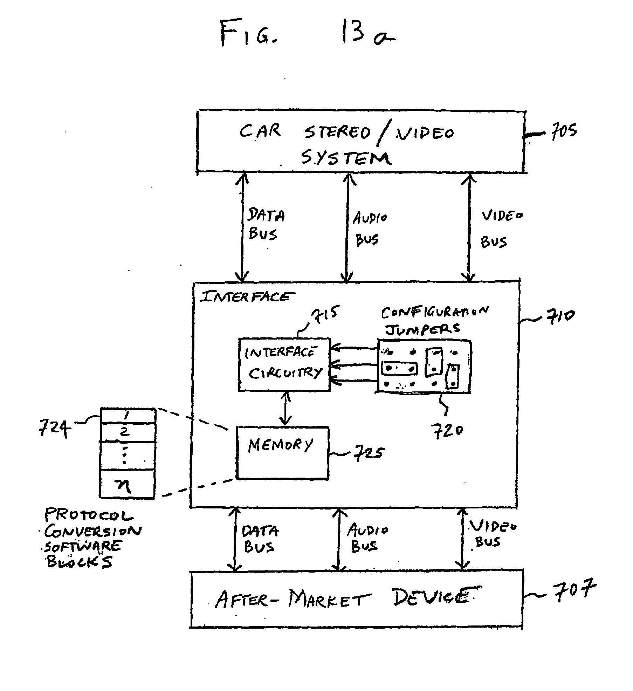

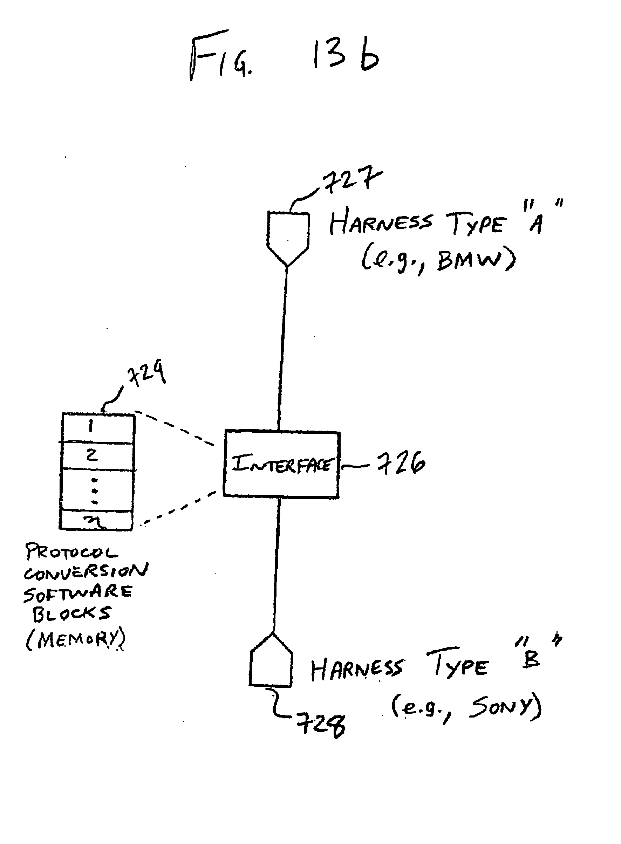

**FIG. 13a** is a block diagram showing an alternate embodiment of the multimedia device integration system **710** of the present invention, wherein configuration jumpers **720** and protocol conversion software blocks **724** are provided for integrating after-market devices of various types using a single interface. The jumpers **720** can be set to a plurality of different settings, each of which corresponds to an after-market device of a specific type (e.g., CD changer, CD player, digital media player, satellite radio, video device, cellular telephone, etc.) or from a specific manufacturer. Additionally, the jumpers **720** can be used to specify one or more device or manufacturer types for the car stereo or video system **705.** The settings of the configuration jumpers **720** correspond to one or more protocol conversion software blocks **724** stored in memory (e.g., programmable flash memory, ROM, EEPROM, etc.) **725** of the interface **710.** Each of the software blocks **724** controls the interface circuitry **715** and contains instructions for converting data from the device **707** into a format compatible with the car stereo or video system **705,** and vice versa. For example, a first block could contain software for allowing communication between an Apple iPod and an in-dash car stereo manufactured by Sony, and a second block could contain software for allowing communication between a DVD player and a car video system. Any desired number of blocks could be stored in the memory **725** and can be selected as desired by the user via configuration jumpers **720.** As such, a single interface **710** can be used for integrating numerous devices of various types and manufactures for use with one or more car stereo or video systems. The device **710** could include one or more of the circuits shown in **FIGS. 3a-3d,** with modifications depending upon the device types of the devices **705** and **707.**

**FIG. 13b** is a block diagram showing an alternate embodiment of the multimedia device integration system of the present invention, wherein wiring harnesses **727** and **728** and protocol conversion software blocks **729** are provided for integrating multimedia devices of various types using a single interface **726.** In this embodiment, the electrical configurations (pinouts) of each of the harnesses **727** and **728** correspond to car stereo / video systems and after-market devices of specific types and made by specific manufacturers (e.g., harness **727** could correspond to a BMW car stereo, and harness **728** could correspond to an ALPINE satellite tuner). The electrical configurations (pinouts) of the harnesses are utilized by the interface **726** to retrieve a specific protocol conversion software block **729** that allows communication between the devices. The interface **726** could be provided with a plurality of protocol conversion software blocks preloaded into memory in the interface, and could be provided with any desired harnesses. The interface **726** could include one or more of the circuits shown in **FIGS. 3a-3d,** with modification depending upon the device types of the devices attached to the wiring harnesses **727** and **728.**

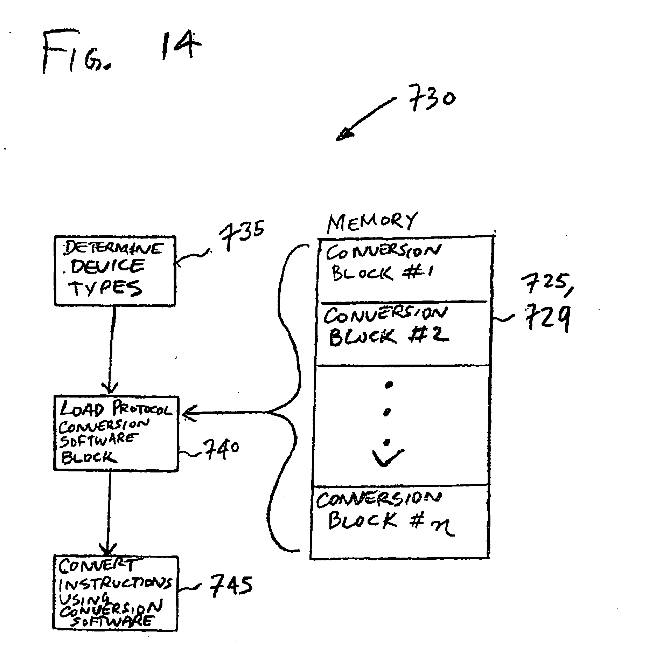

**FIG. 14** is a flowchart showing processing logic, indicated generally at **730,** of the multimedia device integration system of the present invention for integrating after-market devices of various types using a single interface. In step **735,** the interface determines types of devices that are connected thereto, including the car stereo or video system and one or more after-market devices to be integrated therewith. This could be achieved by the configuration jumper settings or the harness types connected to the interface and discussed with respect to **FIGS. 13a** and **13b.** Then, in step **740,** a protocol conversion software block is selected from blocks of conversion software (e.g., from the blocks **725** and **729** shown in **FIGS. 13a** and **13b).** In step **745,** instructions are converted using the selected conversion block to allow the car stereo or video system to operate with the multimedia device.

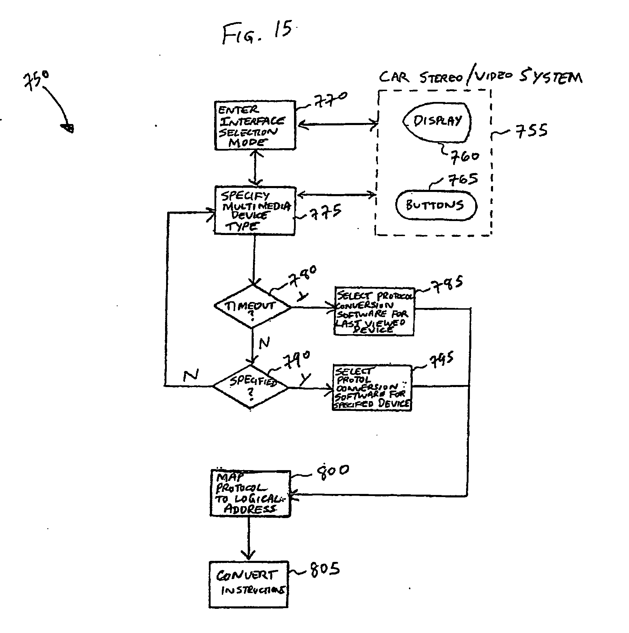

**FIG. 15** is a flowchart showing processing logic, indicated generally at **750,** of the multimedia device integration system of the present invention for allowing a user to specify one or more after-market device types for integration using a single interface. In step **770,** a user is provided with one or more lists of devices to be integrated, which are displayed on the display **760** of the car stereo or video device **755.** Then, in step **775,** using the buttons **765** of the car video device, the user can specify the type of multimedia device to be integrated (e.g., by scrolling through the lists). Additionally, the device type could be specified using a graphical or software menu displayed on the car stereo or car video system. In step **780,** a determination is made as to whether a timeout has occurred (e.g., the user has not selected a device type within a predetermined period of time). If a positive determination is made, step **785** occurs, wherein a protocol conversion software block is selected from memory corresponding to the last device type displayed by the car stereo or video system. If a negative determination is made, step **790** is invoked, wherein a determination is made as to whether the user has specified a device type. If a negative determination is made, step **775** is re-invoked so that the user can specify a device type. If a positive determination is made, step **795** is invoked, wherein a protocol conversion software block is selected from memory corresponding to the device specified by the user. In step **800,** the protocol conversion software block is mapped to a logical address in memory. Then, in step **805,** instructions to be exchanged between the car stereo or video system and the after-market device are converted using the software block to allow communication between the devices using compatible formats. Accordingly, the logic of **FIG. 15** allows a single interface having multiple protocol conversion software blocks to be used integrate a plurality of after-market devices with a car stereo or video system.

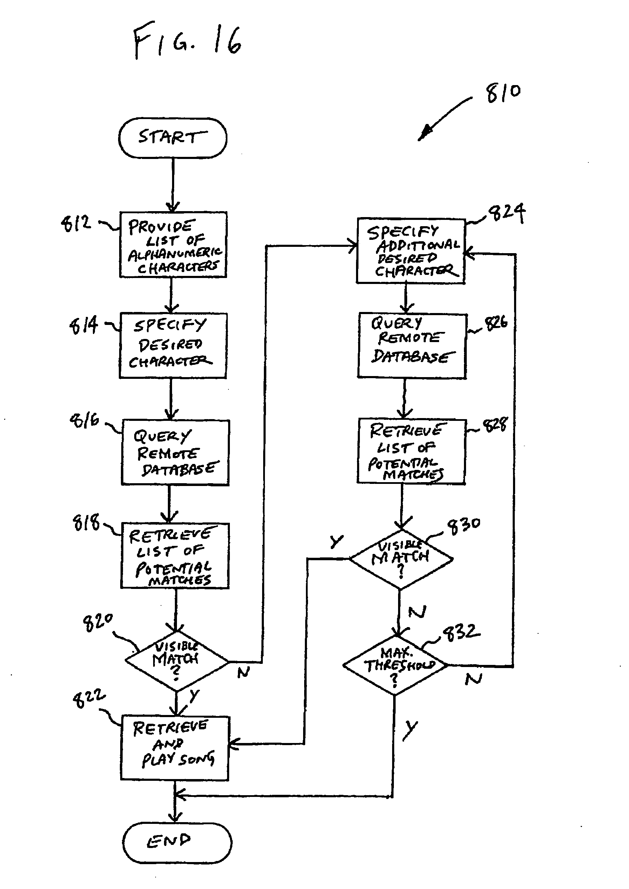

**FIG. 16** is a flowchart showing processing logic of the multimedia device integration system of the present invention, indicated generally at **810,** for allowing a user to quickly navigate through a list of songs on one or more after-market devices using the controls of a car stereo or video system (fast navigation technique). This method allows a user to quickly select a song from a list of songs available on an after-market device for playing on the car stereo or video system, and could be applied for use with any type of after-market device, including, but not limited to, a digital media player such as an MP3 player or Apple iPod player. Beginning in step **812,** a user is provided with a list of alphanumeric characters on a display of the car stereo or video system. This list could include the letters A through Z, as well as the numbers 0 through 9. In step **814,** the user can specify a desired alphanumeric character, which can be specified by scrolling through the list using one or more controls of the car stereo or video system and pressing a button once the desired character has been highlighted, or optionally, if an alphanumeric keypad (or touchscreen interface) is provided on the car stereo or video system, the user can directly enter the desired alphanumeric character.

When the desired alphanumeric character has been specified, in step **816** a remote database is queried using the alphanumeric character. The remote database could comprise a list of songs stored in one or more after-market devices integrated by the present invention for use with the car stereo or video system. In step **818,** a list of potentially matching songs is retrieved from the database and presented on the display of the car stereo or video system for perusal by the user. For example, if the user specified the letter "A," the list could include all songs in the remote database having titles (or artists) beginning with the letter "A." In step **820,** a determination is made as to whether a desired song appears in the list and is immediately viewable by the user, without requiring the user to scroll through the list. If a positive determination is made, step **822** is invoked, wherein the desired song is selected by the user and retrieved from the after-market device for playing on the car stereo or video system.

In the event that a negative determination is made in step **820,** step **824** is invoked, wherein the user can specify an additional alphanumeric character using the car stereo or video system. For example, if the user initially specified the letter "A" and the desired song is not visible in the list of songs without scrolling, the user can refine the query by adding an additional alphanumeric character. Thus, for example, the user can specify the letters "AN" to search for songs having titles (or artists) beginning with the letters "AN." In step **826,** the remote database of the after-market device is queried using the specified letters. In step **828,** a list of potential matches is presented to the user at the car stereo or video system. In step **830,** a determination is made as to whether the desired song appears in the list and is immediately viewable without requiring the user to scroll through the list. If a positive determination is made, step **822** is invoked, wherein the user can select the desired song for retrieval from the after-market device and playing on the car stereo or video system. If a negative determination is made, step **832** is invoked, wherein a determination is made as to whether a threshold number of alphanumeric characters has been specified by the user. For example, a maximum threshold of 3 alphanumeric characters could be specified, or any other desired number. If a negative determination is made, steps **824-832** are re-invoked in the manner disclosed herein to allow the user to specify additional alphanumeric characters for querying the remote database. If a positive determination is made (threshold met), then processing terminates and the user must scroll through the list of retrieved songs or repeat the processing disclosed in **FIG. 16** to begin a new query.

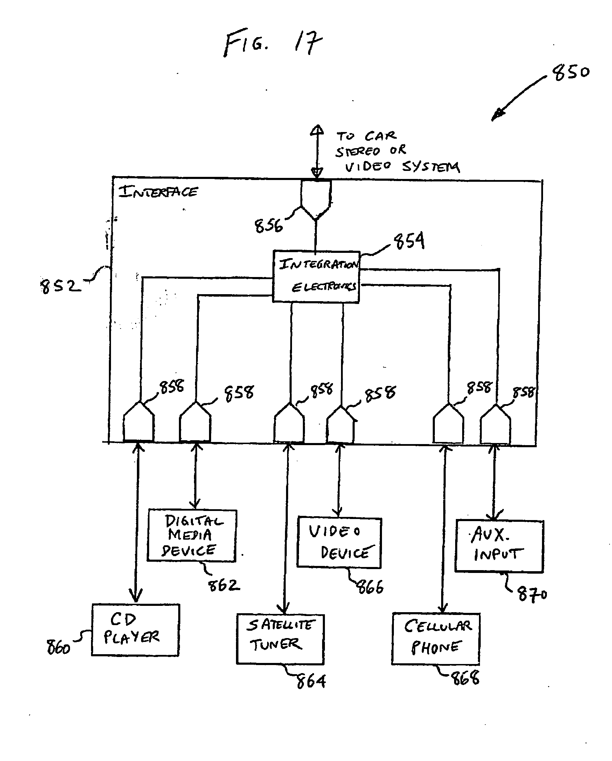

**FIG. 17** is a diagram showing an another embodiment of the present invention, indicated generally at **850,** wherein a plurality of external devices are integrated using a single interface **852.** Any desired number or combination of devices can be integrated for use with a car stereo or video system using the interface **852.** The interface **852** houses a plurality of ports **858** for connecting any desired number of external devices, and a port **856** for connection with a car stereo or video system. The ports **858** and **856** could be any suitable type of input port, and could vary depending upon the types of devices to be integrated. Additionally, the interface **852** includes integration electronics **854,** which could include any desired electronics disclosed herein for integrating a plurality of external devices.

As shown in **FIG. 17,** a CD player **860,** a digital media device **862,** a satellite tuner **864,** a video device **866,** a cellular phone **868,** and an auxiliary input **870** are connected to the interface **852** and integrated for use with a car stereo or video system. The CD player **860** could comprise any desired CD player or changer. The digital media device **862** could comprise any portable digital media device, such as an Apple iPod, MP3 player, MP4, player, WMV player, portable music center, or any other desired device. The satellite tuner **864** could comprise any desired satellite tuner, such as an XM or Sirius tuner. The video device **866** could comprise any desired video device, such as a DVD player. The cellular phone **868** could comprise any cellular telephone capable of downloading and storing music or video files. The auxiliary input **870** could comprise any desired external device. Any desired number of interfaces **852** could be interconnected ("daisy-chained"). Further, the interface **852** could form part of an existing car stereo or video system. Control of the external devices connected to the interface **852** is provided through the car stereo or video system.

Having thus described the invention in detail, it is to be understood that the foregoing description is not intended to limit the spirit and scope thereof.

## Claims

1. A multimedia device integration system comprising:
a car stereo system;
an after-market device external to the car stereo system;
an interface positioned within the car stereo system and connected between the car stereo system and the after-market device for exchanging data and audio signals between the car stereo system and the after-market device;
means for processing and dispatching commands for controlling the after-market device from the car stereo system in a format compatible with the after-market device; and
means for processing and displaying data from the after-market device on a display of the car stereo system in a format compatible with the car stereo system.

2. The apparatus of claim 1, wherein the after-market device comprises a CD player, CD changer, digital media player, Digital Audio Broadcast (DAB) receiver, satellite receiver, or a cellular telephone.

3. The apparatus of claim 2, wherein the digital media player comprises an MP3 player, an MP4 player, WMV player, or an Apple iPod.

4. The apparatus of claim 1, further comprising one or more auxiliary input sources connected to the interface.

5. A multimedia device integration system comprising:
a car stereo system;
a cellular telephone external to the car stereo system;
an interface connected between the car stereo system and the cellular telephone for exchanging data and audio signals between the car stereo system and the cellular telephone;
means for processing and dispatching commands for controlling the cellular telephone from the car stereo system in a format compatible with the cellular telephone; and
means for processing and displaying data from the cellular telephone on a display of the car stereo system in a format compatible with the car stereo system.

6. The apparatus of claim 5, further comprising songs or music downloadable through the cellular telephone.

7. The apparatus of claim 6, wherein the songs or music are playable through the car stereo system using the interface.

8. A multimedia device integration system comprising:
a car video system;
a cellular telephone external to the car video system;
an interface connected between the car video system and the cellular telephone for exchanging data, audio, and video signals between the car video system and the cellular telephone;
means for processing and dispatching commands for controlling the cellular telephone from the car video system in a format compatible with the cellular telephone; and
means for processing and displaying data from the cellular telephone on a display of the car video system in a format compatible with the car video system.

9. The apparatus of claim 8, further comprising songs or music downloadable through the cellular telephone.

10. The apparatus of claim 9, wherein the songs or music are playable through the car video system using the interface.

11. A multimedia device integration system comprising:
a car video system;
an after-market video device external to the car video system;
an interface connected between the car video system and the after-market video device for exchanging data, audio, and video signals between the car video system and the after-market video device;
means for processing and dispatching commands for controlling the after-market video device from the car video system in a format compatible with the after-market video device; and
means for processing and displaying data from the after-market video device on a display of the car video system in a format compatible with the car video system.

12. The apparatus of claim 11, wherein the after-market video device comprises a DVD player.

13. The apparatus of claim 11, wherein the interface is positioned within the car video system.

14. A multimedia device integration system comprising:
an interface in electrical communication with a car stereo system and an after-market device;
a plurality of configuration jumpers in the interface for specifying a first device type corresponding to the car stereo system and a second device type corresponding to the after-market device; and
a plurality of protocol conversion software blocks stored in memory in the interface for converting signals from the after-market device into a first format compatible with the car stereo system and for converting signals from the car stereo system into a second format compatible with the after-market device, wherein at least one of the protocol conversion software blocks are selected by the interface using settings of the plurality of configuration jumpers.

15. The system of claim 14, wherein the plurality of protocol conversion software blocks allow a plurality of after-market devices to integrated with the car stereo system.

16. The system of claim 14, wherein the plurality of configuration jumpers are settable by a user.

17. A multimedia device integration system comprising:
an interface in electrical communication with a car video system and an after-market device;
a plurality of configuration jumpers in the interface for specifying a first device type corresponding to the car video system and a second device type corresponding to the after-market device; and
a plurality of protocol conversion software blocks stored in memory in the interface for converting signals from the after-market device into a first format compatible with the car video system and for converting signals from the car video system into a second format compatible with the after-market device, wherein at least one of the protocol conversion software blocks are selected by the interface using settings of the plurality of configuration jumpers.

18. The system of claim 17, wherein the plurality of protocol conversion software blocks allow a plurality of after-market devices to integrated with the car video system.

19. The system of claim 17, wherein the plurality of configuration jumpers are settable by a user.

20. A multimedia device integration system comprising:
an interface in electrical communication with a car stereo system and an after-market device;
first and second wiring harnesses attached to the interface, wherein the first wiring harness includes a first electrical configuration corresponding to the car stereo system and the second wiring harness includes a second electrical configuration corresponding to the after-market device; and
a plurality of protocol conversion software blocks stored in memory in the interface for converting signals from the after-market device into a first format compatible with the car stereo system and for converting signals from the car stereo system into a second format compatible with the after-market device, wherein at least one of the protocol conversion software blocks are selected by the interface using the first and second electrical configurations of the first and second wiring harnesses.

21. The system of claim 20, further comprising a plurality of wiring harnesses corresponding to additional device types and connectable to the interface.

22. A multimedia device integration system comprising:
an interface in electrical communication with a car video system and an after-market device;
first and second wiring harnesses attached to the interface, wherein the first wiring harness includes a first electrical configuration corresponding to the car video system and the second wiring harness includes a second electrical configuration corresponding to the after-market device; and
a plurality of protocol conversion software blocks stored in memory in the interface for converting signals from the after-market device into a first format compatible with the car video system and for converting signals from the car video system into a second format compatible with the after-market device, wherein at least one of the protocol conversion software blocks are selected by the interface using the first and second electrical configurations of the first and second wiring harnesses.

23. The system of claim 22, further comprising a plurality of wiring harnesses corresponding to additional device types and connectable to the interface.

24. A method for integrating an after-market device for use with a car stereo system comprising:
interconnecting the car stereo system and the after-market device with an interface;
determining a first device type corresponding to the car stereo system and a second device type corresponding to the after-market device;
loading a protocol conversion software block from memory in the interface using the first and second device types;
converting signals from the after-market device into a first format compatible with the car stereo system using the protocol conversion software block;
converting signals from the car stereo system into a second format compatible with the after-market device using the protocol conversion software block; and
exchanging converted signals between the car stereo system and the after-market device.

25. The method of claim 24, wherein the step of determining the first and second device types comprises determining jumper settings of the interface, wherein the jumper settings correspond to the first and second device types.

26. The method of claim 24, wherein the step of determining the first and second device types comprises determining electrical configurations of wiring harnesses attached to the interface, wherein the electrical configurations correspond to the first and second device types.

27. The method of claim 24, wherein the step of determining the first and second device types comprises allowing the user to specify a device type of the after-market device using the car stereo system.

28. A method for integrating an after-market device for use with a car video system comprising:
interconnecting the car video system and the after-market device with an interface;
determining a first device type corresponding to the car video system and a second device type corresponding to the after-market device;
loading a protocol conversion software block from memory in the interface using the first and second device types;
converting signals from the after-market device into a first format compatible with the car video system using the protocol conversion software block;
converting signals from the car video system into a second format compatible with the after-market device using the protocol conversion software block; and
exchanging converted signals between the car video system and the after-market device.

29. The method of claim 28, wherein the step of determining the first and second device types comprises determining jumper settings of the interface, wherein the jumper settings correspond to the first and second device types.

30. The method of claim 28, wherein the step of determining the first and second device types comprises determining electrical configurations of wiring harnesses attached to the interface, wherein the electrical configurations correspond to the first and second device types.

31. The method of claim 28, wherein the step of determining the first and second device types comprises allowing the user to specify a device type of the after-market device using the car video system.

32. A method for retrieving a song from an after-market device from a car stereo system comprising:
allowing a user to specify an alphanumeric character using controls of the car stereo system;
querying a database of songs in the after-market device using the alphanumeric character;
displaying a list of potentially matching songs in the after-market device on a dsplay of the car stereo system; and
allowing the user to select a desired song from the list of potentially matching songs for playing the desired song on the car stereo system.

33. The method of claim 32, further comprising allowing the user to specify one or more additional alphanumeric characters using the controls of the car stereo system.

34. The method of claim 33, further comprising querying the remote database using the one or more additional alphanumeric characters and displaying a second list of potentially matching songs on the display of the car stereo system.

35. The method of claim 32, wherein the step of allowing the user to specify the alphanumeric character comprises providing the user with a list of alphanumeric characters on the display of the car stereo and allowing the user to select a desired character from the list of alphanumeric characters.

36. A multimedia device integration system comprising:
a car audiovisual system;
a plurality of after-market devices external to the car audiovisual system;
an interface connected between the car audiovisual system and the plurality of after-market devices for exchanging data, audio, and video signals between the car audiovisual system and the plurality of after-market devices;
means for processing and dispatching commands for controlling the plurality of after-market devices from the car audiovisual system in at least one format compatible with at least one of the plurality of after-market devices; and
means for processing and displaying data from the plurality of after-market devices on a display of the car audiovisual system in a format compatible with the car audiovisual system.
